(19) **Europäisches Patentamt European Patent Office Office européen des brevets**

(11) **EP 4 413 420 B1**

(12) **FASCICULE DE BREVET EUROPEEN**

(45) Date de publication et mention de la délivrance du brevet:
**16.07.2025 Bulletin 2025/29**

(21) Numéro de dépôt: **22817295.3**

(22) Date de dépôt: **05.10.2022**

(51) Classification Internationale des Brevets (IPC):
**G02F 1/1343** *(2006.01)* **G02F 1/1347** *(2006.01)*
**G02F 1/137** *(2006.01)*

(52) Classification Coopérative des Brevets (CPC):
**G02F 1/134363; G02F 1/13475; G02F 1/13476; G02F 1/13725; G02F 1/13775;** G02F 2201/124

(86) Numéro de dépôt international:
**PCT/FR2022/051880**

(87) Numéro de publication internationale:
**WO 2023/057719 (13.04.2023 Gazette 2023/15)**

(54) **SYSTEME OPTIQUE A CRISTAUX LIQUIDES**

OPTISCHES FLÜSSIGKRISTALLSYSTEM

LIQUID-CRYSTAL OPTICAL SYSTEM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **06.10.2021 FR 2110590**

(43) Date de publication de la demande:
**14.08.2024 Bulletin 2024/33**

(73) Titulaires:
• **Saint-Gobain Glass France 92400 Courbevoie (FR)**
• **Centre National de la Recherche Scientifique 75794 Paris Cedex 16 (FR)**

(72) Inventeurs:
• **MONDIOT, Frédéric 93303 AUBERVILLIERS (FR)**
• **MONTIGAUD, Hervé 93303 AUBERVILLIERS (FR)**

(74) Mandataire: **Saint-Gobain Recherche 41 Quai Lucien Lefranc 93300 Aubervilliers (FR)**

(56) Documents cités:
**WO-A1-2015/177356 WO-A1-2020/065038 WO-A1-2021/115246 US-A1- 2012 140 133**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne un système optique à cristaux liquides comportant un dispositif électrocommandable à diffusion variable par cristaux liquides.

On connait des vitrages dont certaines caractéristiques peuvent être modifiées sous l'effet d'une alimentation électrique appropriée, tout particulièrement la transmission, l'absorption, la réflexion dans certaines longueurs d'ondes du rayonnement électromagnétique, notamment dans le visible et/ou dans l'infrarouge, ou encore la diffusion lumineuse.

Le vitrage électrocommandable à cristaux liquides peut être utilisé partout, tant dans le secteur de la construction que dans le secteur de l'automobile, chaque fois que la vue à travers le vitrage doit être empêchée à des moments donnés.

Les couches de cristaux liquides sont connues sous le terme de « PDLC » (Polymer Dispersed Liquid Cristal en anglais) sous forme de gouttelettes de premiers cristaux liquides dispersées dans une matrice polymère ou encore « PSLC » (Polymer Stabilized Liquid Cristal en anglais) cristaux liquides répartis de manière homogène.

La demande de brevet WO2020/065038 propose un dispositif électrocommandable à cristaux liquides à base de « PSLC » et comportent des défauts topologiques bidimensionnels permettant d'obtenir des nombreux états de diffusion de manière réversible. Les documents WO 2021/115246 A1, WO 2015/177356 A1, US 2012/140133 A1 font également partie de l'état de la technique utile pour comprendre l'invention.

Un objet de l'invention consiste à développer un dispositif électrocommandable à cristaux liquides avec des propriétés électro-optiques encore plus ajustables à façon. A cet effet, la présente invention propose un système optique à cristaux liquides comportant :

- un dispositif électrocommandable à diffusion variable (dispositif plan ou courbe notamment flexible), dit premier dispositif, comportant un empilement de couches (lame d'air comprise éventuellement de préférence formant un ensemble de couches (solides) incluant une couche de cristaux liquides) suivant :

    - une première électrode transparente notamment autoportante (film éventuellement flexible) ou de préférence sur un substrat diélectrique de préférence transparent (et éventuellement flexible), en particulier substrat d'épaisseur d'au plus 1cm, 5mm, 3mm ou submillimétrique ou en particulier substrat qui est un film plastique ou verre mince ou ultramince ('UTG' en anglais), film d'épaisseur submillimétrique et même d'au plus 200nm, en particulier première électrode comportant (voire constituée de) une première couche électroconductrice (monocouche ou multicouche, en particulier dépôt(s)) notamment minérale en particulier d'épaisseur d'au plus 200nm (sur le premier substrat), première électrode avec une première surface principale dite première surface de liaison et une surface dite surface Sb opposée, notamment première électrode comportant un premier moyen d'amenée de courant (bande -bus bar-notamment métallique, en cuivre, à l'argent etc) en bordure de la première surface de liaison

    - une deuxième électrode transparente ,de préférence face à la première électrode (deux électrodes formant une configuration « plan - plan »), notamment autoportante (éventuellement flexible) ou de préférence sur un support diélectrique de préférence transparent (de préférence distinct dudit substrat pour la première électrode en configuration « plan - plan ») , en particulier support d'épaisseur d'au plus 1cm, 5mm, 3mm ou submillimétrique en particulier film plastique ou en verre mince ou ultramince (UTG en anglais), film d'épaisseur submillimétrique et même d'au plus 200nm, notamment deuxième électrode comportant (voire constituée de) une deuxième couche électroconductrice (monocouche ou multicouche en particulier dépôt(s)) notamment minérale en particulier d'au plus 200nm (sur le support), deuxième électrode ayant une surface principale dite deuxième surface de liaison SA2 et avec une surface externe SB2 opposée, en particulier deuxième électrode comportant un deuxième moyen d'amenée de courant (bande notamment métallique, bus bar) en bordure de la deuxième surface de liaison et mieux à l'opposé du premier moyen d'amenée de courant, avec un premier champ électrique E1 entre les première et deuxième électrodes

    - une première couche électroactive diélectrique avec une face principale dite face FA1 première surface de liaison SA1 et une face principale dite face FA2 opposée de préférence côté deuxième surface de liaison SA2, de préférence entre les première et deuxième électrodes (configuration plan - plan), la première couche électroactive étant d'épaisseur $Ep_1$ submillimétrique et même d'au plus $100\mu m$ et d'au moins 50nm, notamment de 50nm à $50\mu m$ et même de 100nm à $20\mu m$ et mieux d'au moins $1\mu m$ ou $5\mu m$, première couche électroactive en une première matière de préférence thermotrope contenant (voire constituée de) :

        - des premiers cristaux liquides (thermotropes de préférence) de préférence majoritaires en poids dans la matière (de préférence au moins 50%, 70%, 80%, 85% en poids desdits premiers cristaux liquides), notamment premiers cristaux liquides comportant des mésogènes, par exemple sans chaine de polymère ou qui sont des groupements incorporés dans une chaine principale ou latérale d'un polymère (famille dite 'LCP' en anglais), en particulier premiers cristaux liquides de taille d'au plus 50nm, 20nm ou 10nm (et inférieure à $Ep_1$), en particulier un

mélange de plusieurs premiers cristaux liquides (purs, au sens non LCP), donc plusieurs mésogènes notamment des premiers cristaux liquides qui en face FA1 ou de préférence en face FA2 sont orientés suivant une première direction b à l'état off (hors tension) via une couche d'ancrage unidirectionnelle selon la première direction b en contact avec la face FA1 ou FA2 de préférence

- des polymères formant un réseau (tridimensionnel) polymérique, les premiers cristaux liquides étant stabilisés (physiquement) par le réseau polymérique - (c'est-à-dire de la famille PSLC en anglais ou CLSPS en français), de préférence avec au plus 20%, 15%, 10%, 5% en poids de polymère (ou polymères et précurseurs de polymères),
- éventuellement des précurseurs de(sdits) polymères ou encore des polymères non réticulés (notamment en ajustant le taux de polymérisation),
- au moins un premier colorant dichroïque (en particulier à l'état dissous, notamment dans les premiers cristaux liquides), par exemple au plus 30%, 20%, 10%, 5% en poids de premier colorant dichroïque (un ou plusieurs premiers colorants dichroïques), premier colorant dichroïque notamment de taille d'au plus 50nm, 20nm ou 10nm (et inférieure à $Ep_1$) en particulier premiers cristaux liquides et premier colorant dichroïque sont de tailles comparables par exemple chacun de moins de 20 ou 10nm,
- de préférence des (premiers) espaceurs notamment de hauteur (et même de plus grande dimension) inférieure ou égale à $Ep_1$, en périphérie (diélectrique, transparents ou non éventuellement masqués par un cadre, par exemple en mylar etc) et/ou dispersés dans la première couche électroactive (diélectriques, transparents, notamment plastique, verre, silice, de préférence subcentimétriques, notamment des billes)
- éventuellement des additifs (autres que le premier colorant dichroïque), par exemple des particules colorantes telles que des nanoparticules métalliques (or, argent, alliage des deux etc) ou d'oxyde métallique (oxyde de tungstène, d'étain etc) ou même tout autre colorant non-dichroïque ou toute autre molécule absorbant la lumière, de préférence de hauteur inférieure ou égale à Ep1 (et même de plus grande dimension inférieure ou égale à Ep1).

De préférence, la première couche électroactive est scellée en périphérie par un joint diélectrique notamment polymérique (en bordure des première et deuxièmes surfaces de liaisons, en contact avec la matière à base de premiers cristaux ou séparé par un espaceur périphérique) par exemple large d'au plus 1cm.

En outre la première matière présente une mésophase dite P, à partir d'une température dite T1 (et en dessous d'une température dite Tf qui peut être la température de transition en phase isotrope), dans laquelle en particulier la première matière comporte (en volume, dans l'épaisseur le plus souvent), un ensemble de domaines (contenant les premiers cristaux liquides stabilisés par le réseau polymérique et le ou les premiers colorants dichroïques et éventuellement des additifs), et même est essentiellement divisée en lesdits domaines ou éléments de volumes,- les domaines s'étendant de préférence au moins sur une fraction de l'épaisseur Ep1 et de préférence au moins 90% de l'épaisseur. Et les domaines comportent des défauts topologiques bidimensionnels en particulier des défauts lignes avec au moins deux formes de défauts lignes (par exemple l'un elliptique -cercle inclus- l'autre ligne droite ou courbe, hyperbole etc).

En particulier, à partir d'une température T' supérieure ou égale à T1 (et en dessous d'une température dite Tf qui peut être la température de transition en phase isotrope), le dispositif électrocommandable étant ainsi susceptible de présenter une pluralité d'états diffusants et/ou colorés réversibles notamment sous un premier champ électrique E1 entre les première et deuxième électrodes (normal ou parallèle aux première et deuxième électrodes), en particulier sous une tension électrique U1 donnée de préférence d'au plus 120V ou 100V.

En outre, le système selon l'invention comporte en face à face avec le premier dispositif,) un dispositif à polarisation variable (en transmission), électrocommutable, dit deuxième dispositif, comportant :

- des troisième et quatrième électrodes transparentes, avec un deuxième champ électrique E2 entre les troisième et quatrième électrodes, notamment les troisième et quatrième électrodes étant coplanaires ou de configuration plan-plan, autoportantes (éventuellement flexibles) ou sous forme de troisième et quatrième couches électroconductrices sur élément porteur commun (configuration coplanaire) ou éléments porteurs distincts en vis-à-vis (configuration plan - plan)
- une deuxième couche électroactive, avec une face principale FA3 côté troisième électrode et une face principale FA4 opposée à FA3, étant d'épaisseur $Ep_2$ submillimétrique et même d'au plus 100µm et d'au moins 50nm, notamment de 50nm à 50µm et même de 100nm à 20µm et mieux d'au moins 1µm ou 5µm, deuxième couche électroactive en une deuxième matière -thermotrope (de préférence)-contenant (voire constituée de) :
- de deuxièmes cristaux liquides thermotropes de préférence qui sont (à T' et au-delà) nématiques, courbés ou non, de préférence torsadés (sous l'action de couches d'ancrage) à l'état off hors tension électrique et/ou cholestériques- (de préférence majoritaires en poids dans la matière (de préférence au moins 50%, 70%, 80%, 85% 95% en poids desdits deuxièmes cristaux liquides), notamment deuxièmes cristaux liquides comportant des mésogènes, par exemple sans chaine de polymère ou qui sont des groupements incorporés dans une chaine principale ou latérale d'un polymère (famille dite 'LCP' en anglais), en particulier deuxièmes cristaux liquides de taille d'au plus 50nm, 20nm ou 10nm (et

inférieure à $Ep_2$), en particulier un mélange de plusieurs deuxièmes cristaux liquides (purs, au sens non LCP), donc plusieurs mésogènes

- des deuxièmes colorants dichroïques,(en particulier à l'état dissous, notamment dans les deuxièmes cristaux liquides), par exemple au plus 30%, 20%, 10%, 5% en poids de deuxièmes colorant dichroïques (un ou plusieurs deuxièmes colorants dichroïques), deuxième colorant dichroïque notamment de taille d'au plus 50nm, 20nm ou 10nm (et inférieure à $Ep_2$) en particulier deuxièmes cristaux liquides et deuxièmes colorants dichroïques sont de tailles comparables par exemple chacun de moins de 20 ou 10nm, deuxièmes colorants dichroïques ayant de préférence une longueur d'onde d'absorption comprise dans la gamme d'absorption des premiers colorants dichroïques
- éventuellement des polymères (non réticulés de préférence) ou précurseur de polymère de préférence avec au plus 20%, 15%, 10%, 5% ou 1% en poids de polymère (ou polymères et précurseurs de polymères), par exemple la deuxième couche électroactive n'étant pas du type (PDLC ou PSLC)
- de préférence des autres espaceurs notamment de hauteur (et même de plus grande dimension) inférieure ou égale à Ep2, en périphérie (diélectrique, transparents ou non éventuellement masqués par un cadre, par exemple en mylar etc) et/ou dispersés dans la deuxième couche électroactive (diélectriques, transparents, notamment plastique, verre, silice, de préférence subcentimétriques, notamment des billes)
- éventuellement des autres additifs (autres que les deuxièmes colorants dichroïques), par exemple des particules colorantes telles que des nanoparticules métalliques (or, argent, alliage des deux etc) ou d'oxyde métallique (oxyde de tungstène, d'étain etc) ou même tout autre colorant non-dichroïque ou toute autre molécule absorbant la lumière, de préférence de hauteur inférieure ou égale à Ep2 (et même de plus grande dimension inférieure ou égale à Ep2).

De préférence, la deuxième couche électroactive électrocommutable est scellée en périphérie par un joint diélectrique notamment polymérique (en bordure des surfaces principales), en contact avec la deuxième matière à base de deuxième cristaux ou séparé par un espaceur périphérique).

La troisième électrode s'étend entre la deuxième couche électroactive et le premier dispositif (donc du côté du premier dispositif) par exemple orientée vers la deuxième surface SB2 si premier dispositif à configuration d'électrodes plan plan.

En outre, la quatrième électrode peut être coplanaire avec la troisième électrode (donc également entre la deuxième couche électroactive et le premier dispositif) ou la couche active étant entre les troisièmes et quatrième électrodes (configuration plan plan). Ainsi selon l'invention la combinaison dudit premier dispositif électrocommandable à diffusion variable sensible à la polarisation plus dudit deuxième dispositif électrocommutable à polarisation variable permet d'avoir une large gamme de propriétés optiques disponibles en particulier une large gamme de flou et de transmission lumineuse et de niveau de coloration. En particulier la clarté L*peut varier.

Les mesures de la transmission totale TT ou diffuse TD, de TL ou du flou sont identiques à celles décrites dans l'art antérieur WO2020/065038.

L'espace chromatique L*a*b* CIE 1976, généralement nommé CIELAB, est un espace de couleur particulièrement utilisé pour la caractérisation des couleurs de surface. Trois grandeurs L*, a*, b* sont utilisées : la clarté L* issue de la luminance de la surface ; les deux paramètres a* et b* expriment l'écart de la couleur par rapport à celle d'une surface grise de même clarté. L'existence d'une surface grise, non colorée, achromatique, implique d'indiquer explicitement la composition de la lumière qui éclaire la surface colorée. Cet illuminant est ici la lumière du jour normalisée D65.

L'espace chromatique CIELAB est défini à partir de l'espace CIE XYZ. Par rapport à ce dernier, il présente l'avantage d'une répartition des couleurs plus conforme à la perception des écarts de couleur par le système visuel humain. On peut aussi définir un écart colorimétrique deltaE entre deux couleurs défini par la racine carré de la somme de la différence au carré des L*, de la différence au carré des a*, et de la différence au carré des b*. Le deltaE entre deux couleurs (état off et état on du deuxième dispositif avec premier dispositif éteint ou entre état off des premier et deuxième dispositifs et état on du premier dispositif ou encore deux couleurs sous champ électrique E1 avec état off du deuxième dispositif) dans la présente invention peut être d'au moins 1 ou même d'au moins 7.

L'invention s'applique dans divers domaines notamment dans le bâtiment (fenêtre, cloison, sol vitré), en extérieur notamment dans l'espace urbain, ou dans un véhicule routier, ferroviaire maritime, ou aéronautique (pare-brise, latérale, toit vitré, etc). Intégré à un vitrage de bâtiment ou de véhicule le premier dispositif peut être indifféremment orienté vers l'extérieur ou vers l'intérieur.

Le deuxième dispositif, de préférence de forme similaire au premier dispositif, peut s'étendre sur tout ou partie du premier dispositif en fonction des besoins.

Le système optique peut être sans élément optique susceptible de dépolariser la lumière entre le premier dispositif et le deuxième dispositif.

Le système optique peut être de toute taille car les premier et deuxième dispositifs peuvent être réalisés aisément sans des surfaces de longueur d'au moins 1m.

Entre le premier dispositif et le deuxième dispositif on peut souhaiter éviter de mettre un diffuseur.

Bien entendu on peut éviter tout élément opaque, occultant ou réfléchissant entre le premier dispositif et le deuxième dispositif.

On peut toutefois rajouter un polariseur statique entre le premier dispositif et le deuxième dispositif, tel qu'un film plastique (étiré) à colorants dichroïques. En particulier le polariseur statique peut être conçu pour bloquer la polarisation donnée P1. En particulier le polariseur statique peut être conçu pour bloquer la polarisation donnée P2.

Le deuxième dispositif en lui- même n'a pas besoin de polariseur(s) par exemple polariseur et analyseur croisés pour fonctionner.

Le temps de commutation de chacun des premier et deuxième dispositifs peut être inférieur à quelques secondes. Les états de commutations du système optique sont réversibles et (quasi) immédiats.

Le deuxième dispositif n'a besoin que d'une couche de cristaux liquides (système monocellule) et non plusieurs couches de cristaux liquides pour former un polariseur variable.

Les propriétés optiques du système à cristaux liquides peuvent être ajustables :

- en éteignant ou appliquant le premier champ électrique E1 (de préférence alternatif) et en choisissant le niveau de tension U1
- et/ou en éteignant ou appliquant le deuxième champ électrique E2 (de préférence alternatif) et en choisissant le niveau de tension U2
- en choisissant l'orientation de la polarisation (dominante) de sortie dite P1 (par exemple à l'état off du deuxième dispositif) par rapport à une direction caractéristique b du premier dispositif détaillée plus tard, en particulier P1 sensiblement parallèle ou sensiblement perpendiculaire à b.

En particulier on peut choisir pour l'état « off » du système optique (premier et deuxième dispositifs éteints) un état non masquant (vision aisée à travers le système optique), avec P1 perpendiculaire à b.

En particulier on peut choisir pour l'état « off » du système optique (premier et deuxième dispositifs éteints) un état masquant et plus sombre avec P1 parallèle à b. La couleur dépend essentiellement des premiers colorants dichroïques et peut également dépendre des deuxièmes colorants dichroïques.

On peut commuter d'un état fonctionnel à l'autre :

- par mise sous tension du deuxième dispositif lorsqu'il est apte à délivrer une polarisation suffisamment différente de P1, de préférence normale à P1.
- par mise sous tension du premier dispositif, le deuxième dispositif restant éteint, avec P1 parallèle à b.

Le système optique peut être d'épaisseur d'au plus 1cm ou 5 mm ou 1mm.

Le deuxième dispositif peut être d'épaisseur d'au plus 5 mm ou 1mm ou 0,5mm.

Le premier dispositif peut être d'épaisseur d'au plus 5 mm ou 1mm ou 0,5mm.

Concernant le premier dispositif, les domaines induisent la dépendance des propriétés de diffusion en fonction de l'état de polarisation de la lumière. Le premier colorant dichroïque induit la dépendance des propriétés d'absorption en fonction de l'état de polarisation de la lumière.

Concernant le deuxième dispositif, les deuxièmes colorants dichroïques, asservis aux deuxièmes cristaux liquides, de préférence torsadés à l'état off, jouent un rôle clé pour apporter la fonction de polarisation variable. Le deuxième dispositif à polarisation variable est transparent de préférence présente un flou d'au plus 10% ou 1% ou 0,5% à l'état éteint (off) comme allumé (on).

Les tensions appliquées peuvent être inférieures à 120V ou même 80V.

On peut prévoir d'appliquer U1 (et même de choisir le niveau de U1) et/ou d'appliquer U2 (et même de choisir le niveau de U2) en fonction d'une consigne. Ainsi on peut prévoir des moyens de commande du premier dispositif et/ou du deuxième dispositif.

Les paramètres influençant les propriétés optiques sont notamment :

- le choix des premiers cristaux liquides notamment du mélange de mésogènes (en particulier pour la gamme de température de travail et le niveau de tension U1 pour le « désancrage » à l'état on) et leur anisotropie diélectrique
- le niveau de transparence des électrodes avec une absorption la plus faible possible (de leur support éventuelle) et dans le cas d'électrodes en bandes la densité des bandes (pour abaisser la tension électrique en réduisant l'espace entre bandes et pour réduire les zones sans commutation des cristaux liquides pour augmenter le contraste off /on)
- le choix des premiers et/ou deuxièmes colorants dichroïques (le ratio dichroïque leur concentration, etc) en particulier pour avoir un spectre d'absorption le plus élevé et constant dans le visible
- l'épaisseur des première et/ou deuxième couche électroactives.
- le choix des couches d'ancrages du premier dispositif (le type de défauts ou d'arrangement de défauts) comme du deuxième dispositif (induisant le type de polarisation à l'état off, forçant les nématiques à subir une déformation de torsion).

En particulier, la valeur du flou sans champ électrique appliqué (ou pour une tension donnée) peut varier en fonction de la taille ou du type de défauts bidimensionnels, de leur densité, de l'épaisseur de la matière électroactive, du choix des premiers cristaux liquides, du réseau de polymère (taux de réticulation, condition de polymérisation), du monomère, et de la différence d'indices de réfraction du polymère avec les cristaux liquides.

En particulier, la valeur du flou sans champ électrique appliqué (ou pour une tension donnée) va varier en fonction de l'orientation du ou des premiers cristaux liquides en particulier en fonction de l'angle entre l'axe long (moléculaire) des premiers cristaux liquides et de l'axe de polarisation d'une lumière polarisée suivant le plan parallèle à la surface de la première couche électroactive.

Le flou est par exemple défini comme le rapport de la transmission diffuse TD sur la transmission totale TT. On préfère l'exprimer en %.

Le flou H est de préférence défini comme le rapport entre la transmission lumineuse intégrée associée à de la transmission diffuse TD et la TL.

Chaque état du système optique, diffusant et/ou plus ou moins coloré, peut être défini avec une couleur donnée notamment définie par une clarté L* (et en outre par a*, b*). Le système entier marche que la lumière non polarisée soit incidente sur le premier ou deuxième dispositif.

La caractérisation optique du système optique selon l'invention (et) se fait de préférence en sortie du premier dispositif côté opposé au deuxième dispositif. Par simplicité l'explication de l'influence du deuxième dispositif sur le premier dispositif se fait à partir d'une lumière non polarisée incidente sur le deuxième dispositif. Toutefois on obtient sensiblement les mêmes performances optiques avec une lumière non polarisée incidente sur le premier dispositif (à l'opposé du deuxième dispositif) en mesurant la lumière en sortie du deuxième dispositif.

Le niveau de diffusion et/ou de coloration peut être piloté, notamment ajusté en fonction de données récoltées par des capteurs (température, luminosité etc) en communication avec le système optique (commandant la ou les sources d'alimentation électrique). On peut prévoir un circuit d'alimentation électrique distinct ou partagé par exemple un générateur de tension alternative (et jusqu'à 120V par exemple)

De préférence le deuxième dispositif, dans un état fonctionnel qui est l'état off (éteint), est apte à délivrer une lumière avec une polarisation P1 (dominante) (premier état fonctionnel détaillé plus tard) et une deuxième polarisation P2 (de préférence dominante) à l'état on (deuxième état fonctionnel détaillé plus tard) en particulier P1 est normal à r1 et P2 parallèle à r1.

Plus largement, le deuxième dispositif peut présenter des premier et deuxième états fonctionnels tels que :

- dans le premier état fonctionnel, à partir d'une lumière incidente non polarisée côté opposé au premier dispositif le deuxième dispositif est apte à délivrer une lumière de sortie (polarisée) côté premier dispositif avec une première composante du champ électrique (polarisée) P1 suivant un premier axe et une deuxième composante du champ électrique (polarisée) P2 suivant un deuxième axe normal au premier axe, avec un premier ratio de polarisation défini par :

[Math 1]

$$rp1 = \frac{T1}{T1+T2}$$

rp1 étant d'au moins 70% et mieux d'au moins 90%, et même d'au moins 95% T1 étant la transmission totale à une longueur d'onde entre 380 et 800nm suivant le premier axe voire même la transmission totale moyennée au moins entre 400 et 600nm et même de 380 à 640nm et T2 étant la transmission totale suivant le deuxième axe à la longueur d'onde entre 380 et 800nm, voire même la transmission totale moyennée au moins entre 400 et 600nm et même de 380 à 640nm pour une première tension U2a entre les troisième et quatrième électrodes donnée de préférence nulle

- et dans le deuxième état fonctionnel :

   soit i) à partir d'une lumière incidente non polarisée côté opposé au premier dispositif, le deuxième dispositif étant apte à délivrer une lumière de sortie (polarisée) côté premier dispositif avec un deuxième ratio de polarisation défini par :

[Math 2]

$$rp2 = \frac{T'2}{T'1+T'2}$$

rp2 étant d'au moins 30%, et même d'au moins 50% ou 60%
T'1 étant la transmission totale à une longueur d'onde entre 380 et 800nm suivant le premier axe voire même la transmission totale moyennée au moins entre 400 et 600nm et même de 380 à 640nm et T'2 étant la transmission totale suivant le deuxième axe à la longueur d'onde entre 380 et 800nm voire même la transmission totale moyennée au moins entre 400 et 600nm et même de 380 à 640nm, pour une deuxième tension U2b entre les troisième et quatrième électrodes donnée, éventuellement nulle, U2b distincte de U2a

soit j) à partir d'une lumière incidente non polarisée côté opposé au premier dispositif, le deuxième dispositif étant apte à fournir une lumière de sortie non polarisée côté premier dispositif,

l'un des premier et deuxième états fonctionnels étant à l'état éteint ou off (hors tension électrique), l'autre des premier et deuxième états fonctionnels étant à un état allumé (de mise sous tension électrique).

De préférence, le premier état fonctionnel est l'état éteint (off) et le deuxième état fonctionnel est de préférence selon i) ou le premier état fonctionnel est un état allumé (on) et le deuxième état fonctionnel est selon j).

Dans une configuration, le premier état fonctionnel est l'état éteint et le deuxième état fonctionnel est de préférence selon i). Naturellement le deuxième dispositif présente alors une multitude d'états fonctionnels à l'état allumé. Il existe en particulier une tension seuil à partir duquel la force d'ancrage des deuxième cristaux liquides est vaincue pour une partie des cristaux liquides et plus on augmente la tension plus les cristaux liquides se réorientent jusqu'à une tension de saturation qui est de préférence d'au plus 80V. On peut alors avoir un ratio de polarisation qui varie en fonction de la tension U2 appliquée.

Avantageusement, le premier champ électrique E1 est alternatif et de préférence la première tension électrique appliquée U1 est d'au plus 120V et le deuxième champ électrique E2 est alternatif et de préférence la deuxième tension appliquée U2 est d'au plus 120V. De préférence, les première et deuxième électrodes sont dans des plans distincts, et les premiers cristaux liquides ont une anisotropie diélectrique positive (indépendante de la fréquence du premier champ électrique E1), le premier champ électrique E1 étant perpendiculaire aux premières et deuxième électrodes.

E1 comme E2 est de préférence alternatif avec une fréquence à partir de 50Hz, par exemple une fréquence de 100Hz, 1kHz ou 2kHz. Par tension on entend la tension pic (Vpeak en anglais).

Ainsi les changements d'orientation des premiers cristaux liquides sont induits de préférence par E1 normal à la face FA1 (au plan moyen si l'empilement est courbe par exemple flexible et entre des substrats bombés notamment de verre).

Le système optique selon l'invention à l'état off (des premiers et deuxième dispositifs éteints) peut être coloré avec une couleur donnée C0 notamment définie par une clarté L*0 (et en outre par a*0, b*0).

Le système optique selon l'invention à l'état on du deuxième dispositif (premier dispositif éteint) peut être coloré avec une couleur donnée Ca notamment définie par une clarté L* (et en outre par a*, b*).

Le système optique selon l'invention à l'état on des premier et deuxième dispositifs peut être coloré avec une couleur donnée Cb notamment définie par une clarté L* (et en outre par a*, b*).

Le système optique selon l'invention à l'état on du premier dispositif (deuxième dispositif éteint) peut être coloré avec une couleur donnée Cb notamment définie par une clarté L* (et en outre par a*, b*).

Par ailleurs la couleur peut varier en fonction de la tension U1 et/ou U2.

Le choix de U1 et/ou U2 peut être piloté, notamment ajusté en fonction de données récoltées par des capteurs (température, luminosité etc) en communication avec le dispositif (commandant la source d'alimentation électrique).

La troisième (respectivement la quatrième) électrode peut comporter (voire être constituée de) une couche électroconductrice (monocouche ou multicouche, en particulier dépôt(s)) notamment minérale en particulier d'épaisseur d'au plus 200nm (couche électroconductrice sur élément porteur, de préférence couche électroconductrice entre élément porteur et couche d'ancrage), notamment comportant un moyen d'amenée de courant (bande -bus bar- notamment métallique, en cuivre, à l'argent etc) en bordure.

Dans une configuration plan plan, les troisième et quatrième électrodes en couches s'étendent sur tout ou partie de leur élément porteur distinct.

Dans une première réalisation préférée, pour une commutation planaire (in plane switching » en anglais), les troisième et quatrième électrodes (de préférence en couche) sont coplanaires (sur un élément porteur commun de préférence plutôt qu'autoportantes), formant une alternance de premières et deuxièmes bandes électroconductrices (métalliques par exemple) à des potentiels distincts, bandes allongées (linéaires, de préférence rectilignes) selon une direction r0 et de préférence avec une densité de bandes la plus grande possible (bandes de largeur la plus faible possible et avec un espace interbandes la plus faible possible).

Ainsi on applique une différence de potentiel entre 2 « bornes » situées dans un même plan et isolées électriquement 2 à 2.

Le deuxième champ E2 est alternatif est alors majoritairement planaire (parallèle aux troisième et quatrième électrodes).

On cherche tout en préservant la conductivité électrique, à ce que les bandes soient les plus fines possibles pour améliorer le pouvoir "polariseur" dans le mode ON. On chercher également à diminuer le plus possible la largeur interbandes (bandes isolantes dépourvues de conducteur électrique) pour diminuer la différence de potentiel à appliquer.

Par exemple les bandes électroconductrices et/ou la largeur interbandes (bandes isolantes) sont d'au plus 50μm ou 30μm ou 10μm.

Par exemple les bandes isolantes forment un arrangement en serpentin et on isole une première zone de couche électroconductrice avec une deuxième zone de la couche par une première portion de la première bande isolante du serpentin et par une dernière portion de la dernière bande isolante du serpentin.

On peut prévoir de réaliser cet arrangement de bandes isolantes par retrait d'une couche pleine électroconductrice notamment par faisceau laser. La limite en épaisseur de bande est donnée par la taille du faisceau laser. La limite de la distance inter-bande est dictée par le déplacement du faisceau laser.

L'anisotropie diélectrique de la première couche électroactive (des premiers cristaux liquides) est non nulle et peut être négative ou positive. L'anisotropie diélectrique de la deuxième couche électroactive (des deuxièmes cristaux liquides) est non nulle et peut être négative ou positive.

Le premier dispositif peut comporter :

- une (première) couche d'ancrage directionnelle suivant une première direction b sur l'une des faces FA1 ou FA2, de préférence sur la face FA2, (des premiers cristaux liquides sont globalement orientés en cette face FA2 ou FA1 selon cette première direction b à l'état off du premier dispositif)
- en particulier une (deuxième) couche d'ancrage sur l'autre des face FA1 ou FA2, de préférence sur la face FA1, couche d'ancrage de préférence distinct (antagoniste) de préférence ancrage normal, induisant alors des premiers cristaux liquides globalement orientés perpendiculairement à cette autre face FA1 ou FA2 (ancrage homéotrope).

Dans une configuration avec les troisième et quatrième électrodes coplanaires, le deuxième dispositif, avec de préférence des deuxièmes cristaux liquides nématiques torsadés à l'état off du deuxième dispositif, comporte :

- une (troisième) couche d'ancrage planaire unidirectionnelle selon une (deuxième) direction r1 sur (en contact avec) la face principale FA3 de la deuxième couche électroactive et sur les troisième et quatrième électrodes en particulier P1 est normal à r1 et P2 parallèle à r1
- et une autre (ou quatrième) couche d'ancrage planaire unidirectionnelle selon une (troisième) direction r2 (distincte de r1 de préférence) sur (en contact avec) la face principale FA4 de la deuxième couche électroactive.

En particulier, r1 forme un angle de 90°±15° et mieux de 90°±5° avec r2 (les deuxièmes cristaux liquides nématiques ayant alors une torsion à l'état off) :

- r0 forme un angle d'au plus 15° et même d'au plus 5° avec r1 et les deuxièmes cristaux liquides ont une anisotropie diélectrique positive (alors le premier état fonctionnel du deuxième dispositif avec la polarisation P1 étant l'état off et deuxième état fonctionnel étant un état on et suivant i))
- ou r0 forme un angle de 90°±15° et mieux de 90°±5° avec r1 et les deuxièmes cristaux liquides ont une anisotropie diélectrique négative (alors le premier état fonctionnel du deuxième dispositif avec la polarisation P1 étant l'état off et deuxième état fonctionnel étant un état on et suivant i)).

De préférence, le deuxième dispositif, dans un premier état fonctionnel qui est l'état off, est apte à délivrer une lumière avec une polarisation P1 (dominante) et une deuxième polarisation P2 (dominante) à l'état fonctionnel on (état i) en particulier P1 est normal à r1 et P2 parallèle à r1.

Dans une réalisation (en mode électrodes coplanaires du deuxième dispositif) avec j) lumière non polarisée les deuxièmes cristaux liquides nématiques sont à double fréquence de commutation (« dual frequency » en anglais) ayant une anisotropie diélectrique passant de négative à positive en fonction de la fréquence et le deuxième champ électrique E2 qui alternatif est à fréquence variable.

Alternativement à la configuration coplanaire, la deuxième couche électroactive est entre les troisième et quatrième électrodes (surface SA1 côté face FA3, surface SA2 côté face FA4) et le deuxième dispositif comporte :

- une couche d'ancrage planaire unidirectionnelle selon une direction r1 en contact avec la face FA3 de la deuxième couche électroactive et sur la troisième électrode (notamment en contact avec la troisième électrode)
- et une autre couche d'ancrage planaire unidirectionnelle selon une direction r2 en contact avec la face FA4 de la deuxième couche électroactive et sur la quatrième électrode (notamment en contact avec la quatrième électrode)
- r1 forme un angle d'au plus 15° et même d'au plus 5° avec r2, les deuxièmes cristaux liquides ont une anisotropie diélectrique positive, (alors le premier état fonctionnel du deuxième dispositif avec la polarisation P1 étant l'état off et deuxième état fonctionnel du deuxième dispositif étant un état on (allumé, sous tension électrique) et suivant j) donc lumière de sortie non polarisée)
- ou r1 forme un angle de 90°±15° et mieux de 90°±5 avec r2, les deuxièmes cristaux liquides ont une anisotropie diélectrique positive (alors le premier état fonctionnel du deuxième dispositif avec la polarisation P1 étant l'état off et le deuxième état fonctionnel du deuxième dispositif étant un état on et suivant j) donc lumière de sortie non polarisée)

- ou r1 forme un angle d'au plus 15° et même d'au plus 5° avec r2, les deuxièmes cristaux liquides ont une anisotropie diélectrique négative l'orientation des deuxième cristaux liquides dans l'épaisseur de la deuxième couche électroactive à l'état off du deuxième dispositif est majoritairement homéotrope. (alors le premier état fonctionnel du deuxième dispositif avec la polarisation P1 étant l'état on et le deuxième état fonctionnel du deuxième dispositif étant l'état off et suivant j ) donc lumière de sortie non polarisée).

Dans ce dernier cas, les couches d'ancrages dans le deuxième dispositif peuvent chacune une couche d'ancrage (polyimide etc) générant un ancrage homéotrope, avec un brossage néanmoins pour obtenir un angle de prétilt avec l'axe long des mésogènes des deuxièmes cristaux liquides. Alors un état off est quasi hométropique et l'état on (allumé) où le champ électrique appliqué suivant la verticale va réorienter les mésogènes d'anisotropie diélectrique négative suivant la direction de brossage. Dans cette configuration spécifique, un brossage d'une couche d'ancrage n'a pas un effet d'orientation planaire unidirectionnelle macroscopique à l'état OFF grâce au design de prétilt sur une couche générant, sans brossage, un ancrage homéotrope.

Ce type d'ancrage avec prétilt est décrit dans l'article de Li et autres intitulé « Dye-doped dual-frequency nematic cells as fast-switching polarization-independent shutters » Vol 27 n°4, Fevrier 2019 OPTICS EXPRESS 3861 pages concernant des systèmes à double cellule de cristaux liquides pour passer d'une polarisation linéaire à une extinction totale.

En outre la première couche électroactive (et donc le dispositif électrocommandable à diffusion variable) a une réponse optique dépendant de la polarisation de la lumière incidente.

Cette réponse différenciée à la polarisation de la lumière est induite :

- par le facteur de forme, la structure interne des défauts topologiques bidimensionnels en particulier des défauts lignes en particulier des défauts lignes de domaines coniques focaux non toriques-(non « TFCD » en anglais)-de mésophases smectiques
- et/ou l'arrangement des différents domaines (notamment domaines coniques focaux des mésophases smectiques y compris « TFCD » en anglais) en particulier leur forme, leur orientation leur degré de symétrie, distribués par exemple de manière aléatoire, irrégulière etc, distribution dictée par les conditions d'ancrage (couche d'ancrage 2D ajustables à façon par exemple ancrage multidirectionnel).

Un exemple de diverses architectures de domaines coniques focaux des smectiques (autrement dit domaine à conique focale) sensible à la polarisation est donné dans la publication intitulée « Smectic Layer Origami Preprogrammed Photoalignement » de Ling Ling Ma et autres Advances Materials 2017 1606671 pages 1 à 7.

Dans une réalisation préférée, le deuxième dispositif, dans un premier état fonctionnel qui est l'état off, est apte à délivrer une lumière avec une polarisation P1, le premier dispositif comporte une (première) couche d'ancrage directionnelle suivant une première direction b sur la face FA1 ou de préférence sur la face FA2, le deuxième dispositif est agencé tel que P1 formant un angle avec b de 0°±20° ou mieux de 0°±5° (en particulier r2 formant un angle avec b de 0°±20° ou mieux de 0°±5°).

Dans une réalisation le deuxième dispositif, dans un premier état fonctionnel qui est l'état off, est apte à délivrer une lumière avec une polarisation P1, le premier dispositif comporte une couche d'ancrage directionnelle suivant une première direction b sur la face FA1 (en contact avec la face FA1) ou de préférence sur la face FA2 (en contact avec la face FA1), des premiers cristaux liquides sont alors globalement orientés en face FA1 ou de préférence en face FA2 selon cette première direction b), le deuxième dispositif est agencé tel que P1 formant un angle avec b de 90°±20° ou mieux 90°±5°, (en particulier r1 formant un angle avec b de 90°°±20° ou mieux 90°±5°).

De préférence, comme déjà indiqué, on utilise des couches d'ancrage qui servent à orienter des cristaux liquides par interactions de surface pendant la fabrication, en l'absence de champ électrique appliqué (E1 ou E2).

Jusqu'à une certaine distance depuis la surface avec les couches d'ancrage les (premiers ou deuxièmes) cristaux liquides peuvent demeurent orientés à celle-ci jusqu'à un certain niveau de champ (tension).

L'épaisseur des couches d'ancrage (du deuxième dispositif et/ou du premier dispositif) est de préférence d'au plus 1 $\mu$m mieux submicronique par exemple moins de 600nm.

Il peut aussi y avoir sur une même surface plusieurs zones d'ancrages distinctes. Ces défauts sont générés par des déformations mécaniques de la structure de la matière et sont obtenus par les conditions aux limites imposées par les deux couches d'ancrage forçant les cristaux liquides en contact avec ces couches à des orientations spécifiques et distinctes.

Comme couche d'ancrage planaire unidirectionnel (premier ou deuxième dispositif), on peut utiliser un film de fluoropolymère tel que le polytétrafluoroéthylène PTFE ou téflon (avec les chaines de polymères alignées selon la direction de déplacement de la barre de téflon lors du dépôt).

L'ancrage planaire unidirectionnel fixe orientation zénithal et azimutal du directeur n du cristal liquide), par exemple par texturation, brossage de la couche d'ancrage planaire (rubbing en anglais), par exemple comportant nano ou microsillons.

On peut utiliser un tissu en velours pour le brossage.

Pour un ancrage normal (de préférence premier dispositif), les couches les plus couramment utilisées sont à base l'octyltrichlorosilane (OTS) et chlorure de N,N-diméthyl-N-octadécyl-3-aminopropyltriméthoxysilane (DMOAP) ou des polyimides aussi.

Une couche à base dodécylsulfate de sodium (SDS) ou encore des mélanges d'alcanethiols peuvent aussi générer un ancrage normal.

L'une ou les couches d'ancrage sont par exemple déposées par voie liquide.

L'une ou les couches d'ancrage peut être un film de préférence mince (flexible), par exemple d'au plus 200 $\mu$m ou 50 $\mu$m, qui est notamment porteur d'électrode (première et/ou deuxième) du premier dispositif. L'une ou les couches d'ancrage peut être un film de préférence mince (flexible), par exemple d'au plus 200 $\mu$m ou 50 $\mu$m, qui est notamment porteur d'électrode (troisième et/ou quatrième) du deuxième dispositif.

Une couche d'ancrage (du premier ou deuxième dispositif) est par exemple :

- de préférence diélectrique (notamment amorphe, polymérique et/ou minérale, un verre), avec une fonctionnalisation de la surface, en particulier, une couche à base de polyalcool vinylique (PVA), de polyimide par exemple pour un ancrage planaire (en particulier pour le premier dispositif)
- électroconductrice notamment qui est une fraction d'épaisseur de l'électrode du premier dispositif (première ou deuxième électrode pleine surface, configuration d'électrodes plan plan) ou du deuxième dispositif (troisième ou quatrième électrode pleine surface, configuration d'électrodes plan plan) (par exemple pour un ancrage planaire ).

Une lame d'air fournit un ancrage normal mais on préfère avoir une couche d'ancrage solide..On préfère aussi que les couches d'ancrage notamment diélectriques et soient distinctes des électrodes.

Il peut même y avoir plus de deux couches d'ancrage (trois ou plus), alors il y a plusieurs couches de cristaux liquides espacées par des couches d'ancrages. On préfère une seule couche de cristaux liquides par simplicité pour chacun des premier et deuxième dispositifs.

Le deuxième dispositif, dans un premier état fonctionnel qui est de préférence l'état off, est apte à délivrer une lumière avec une polarisation P1 en particulier normale à r1 (de préférence P1 : formant un angle avec la première direction b de 0° ou 90°±20° ou même de 0° ou 90°±5°). Et :

- dans le premier état fonctionnel, le flou H0 en sortie du premier dispositif est d'au moins 10% (et même 20%) supérieur au flou obtenu avec une lumière incidente non polarisée en entrée du deuxième dispositif
- et de préférence dans un deuxième état fonctionnel, qui est de préférence l'état on du deuxième dispositif, le flou H1 en sortie du premier dispositif est d'au moins 10% (et même 20%) inférieur au flou obtenu avec une lumière incidente non polarisée en entrée du deuxième dispositif.

Les premiers cristaux liquides ont de préférence globalement un degré d'organisation dans une direction donnée b en face FA1 ou en face FA2 (dite face d'orientation planaire).

Leur directeur n -ou axe long- est globalement suivant cette première direction b).

b est en particulier l'axe (de brossage) d'une couche d'ancrage planaire unidirectionnel en contact avec cette face d'orientation planaire (générant interactions entre cristaux liquides avec cette couche solide).

On préfère des domaines de défauts lignes car le flou (le pouvoir diffusant) est remarquable. On préfère des domaines coniques focaux de (méso)phase smectique comme détaillé dans la demande WO2020/065038 incorporée par référence.

Les domaines de défauts comprennent généralement chacun deux lignes de défauts (deux défauts lignes), les coniques focales et qui vont par paires, notamment un elliptique avec différents degrés d'excentricités et l'autre hyperbolique, ainsi le nom donné est « Elliptic-Hyperbolic focal conic domain » ou EHFCD en anglais.

De préférence, la mésophase P est nématique et les domaines sont des domaines coniques focaux notamment de mésophase smectique (mésophase P'), en particulier avec deux défauts lignes de préférence l'un elliptique et l'autre hyperbolique (EHFCD). Les domaines coniques focaux notamment EHFCD forment de préférence un réseau linéaire parallèle à la direction b.

Le colorant dichroïque (premier et/ou deuxième) peut être une molécule organique anisotropique qui présente une anisotropie optique, est allongée, notamment en forme de bâtonnet. Il est à l'état dissous dans la matière notamment dissous dans les premiers cristaux liquides. Le % de (chaque) colorant dichroïque est ajusté pour ne pas dépasser la limite de solubilité. On choisit en particulier un (ou plus) colorant dichroïque compatible chimiquement avec les cristaux liquides.

En particulier, le (chaque) colorant dichroïque (allongé, en bâtonnet) peut présenter un axe long moléculaire et l'absorption varie suivant l'axe long ou l'axe court.

Les (premiers ou deuxièmes) colorants dichroïques est asservi à l'orientation des (premiers ou deuxièmes) cristaux liquides de la couche électroactive en jeu (première ou deuxième), le mouvement (la rotation) des cristaux liquides sous l'effet du champ électrique (E1 ou E2) en jeu, tendant à s'aligner avec le champ électrique en jeu, entrainant le mouvement (la rotation) des colorants dichroïques, l'axe long ayant tendance aussi à l'aligner avec le champ électrique en jeu.

L'absorption d'un colorant dichroïque varie donc en fonction de son orientation par rapport à la polarisation de la lumière incidente. A l'inverse un colorant non dichroïque, ne présentant pas d'anisotropie d'absorption n'est pas ou peu sensible au champ électrique et même ne va pas changer l'absorption. De tels colorants peuvent être ajoutés pour ajuster la teinte souhaitée dans le premier dispositif.

Le premier colorant dichroïque peut avoir une première bande d'absorption (dans le visible) de préférence d'au moins 200nm ou 300nm, et même de préférence de 380nm à 650nm ou même à 700 ou 780nm.

Le deuxième colorant dichroïque peut avoir une deuxième bande d'absorption (dans le visible) de préférence d'au moins 200nm ou 300nm, et même de préférence de 380nm à 650nm ou même à 700 ou 780nm.

Les premier et deuxième colorants dichroïque ont de préférence une gamme commune d'absorption (sans avoir nécessairement le même maximum d'absorption ni le même profil d'absorption) de préférence d'au moins 1nm ou 10 ou 100 nm.

Le premier colorant dichroïque peut avoir un maximum d'absorption lumineuse pour une lumière polarisée suivant une direction r1.

Le deuxième colorant dichroïque peut avoir un maximum d'absorption lumineuse pour une lumière polarisée suivant cette même direction r1.

Il existe plusieurs familles de colorants dichroïques notamment ceux décrit dans la publication de Mark T Sims intitulée « dyes as guests in ordered systems : current understanding and future directions » Liquid Crystals, 2016, Vol 43, NOS. 13-15, page 2363-2374.

Les colorants dichroïques selon l'invention peuvent être les colorants azoïques, avec AZO (-N=N), notamment en forme de bâtonnet. On peut induire des modifications chimiques aux colorants azoïques par exemple avec des groupements esters incorporés (cf p2366 de la publication précitée).

D'autres colorants sont des anthraquinones généralement en anneau liés (fused ring en anglais) ou en bâtonnet en ajoutant des substituants. Des exemples de colorants dichroïques (chromophores) sont en table 1 de cette publication précitée).

Des exemples de colorants dichroïques convenant pour l'invention sont en outre cités dans le livre intitulé « Electroopic effetc in Liquid Crystal Materials » de L.M Blinov et autres, édité par Springer en 1994 en particulier dans le chapitre 2.3 nommé Optical Anisotropiy and Dichroïsm et pages 66 à 68 incluant table 2.2.

Par exemple pour un colorant bleu on peut choisir comme longueur d'onde de maximum d'absorption 630nm ±10nm et comme longueur d'onde hors de la bande d'absorption 430nm±50nm ou ±10nm. Par exemple on peut citer le colorant M412 vendu par la société Mitsui Chemicals.

Par exemple pour un colorant rouge on peut choisir comme longueur d'onde de maximum d'absorption 500nm ±10nm et comme longueur d'onde hors de la bande d'absorption 650nm±50nm ou ±10nm. Par exemple on peut citer le colorant SI-426 vendu par la société Mitsui Chemicals.

Par exemple pour un colorant jaune on peut choisir comme longueur d'onde de maximum d'absorption 400nm ±10nm et comme longueur d'onde hors de la bande d'absorption 600nm±50nm ou ±10nm. Par exemple on peut citer le colorant SI-486 vendu par la société Mitsui Chemicals.

Par exemple pour un colorant noir on peut citer le colorant SI-428 vendu par la société Mitsui Chemicals.

Indépendamment, on peut teinter (plus ou moins fortement) un ou plusieurs des éléments du système (électrode, couche d'ancrage, substrat ou support, intercalaire de feuilletage, contre verre ...) par exemple avec une absorption maximale distincte du premier colorant dichroïque.

Le premier dispositif peut comporter :

- un substrat diélectrique transparent, porteur de la première électrode (et d'une couche d'ancrage notamment normal sur la première électrode), substrat choisi parmi une feuille de verre ou une feuille polymérique transparente avec une éventuelle couche anti-rayures externe
- un support diélectrique transparent, porteur de la deuxième électrode (si configuration plan plan) et au moins d'une couche d'ancrage notamment unidirectionnelle selon b (de préférence sur la première électrode), substrat choisi parmi une feuille de verre ou une feuille polymérique transparente avec une éventuelle couche anti-rayures externe.

Le deuxième dispositif peut comporter :

- un premier élément diélectrique transparent, porteur de la troisième électrode (et de préférence de la quatrième électrode (configuration coplanaire) et même de la couche d'ancrage de préférence unidirectionnelle selon r1, premier élément choisi parmi une feuille de verre ou une feuille polymérique transparente distinct ou correspondant audit support diélectrique

- un deuxième élément diélectrique transparent, porteur de la quatrième électrode si configuration plan - plan et porteur d'au moins une couche d'ancrage de préférence unidirectionnelle selon r2, deuxième élément choisi parmi une feuille de verre ou une feuille polymérique transparente (avec une éventuelle couche anti-rayures externe)

Le premier dispositif et le deuxième dispositif peuvent être espacés, partager un support commun (sur un même côté ou de part et d'autre) ou être liés (support diélectrique et premier élément diélectrique liés).

Dans une réalisation, le premier dispositif et le deuxième dispositif sont liés :

- par une couche de liaison transparente notamment une colle optique (OCA en anglais) ou une couche thermoplastique notamment intercalaire de feuilletage EVA ou PVB
- ou un support commun transparent, de préférence verre en plastique, est porteur :

  - sur une première face principale de la deuxième électrode (voire de la première électrode si coplanaire) et notamment du reste de l'empilement de couches
  - et de l'autre côté sur une deuxième face principale opposé de la troisième électrode (voire de la quatrième électrode si coplanaire) et notamment du reste de l'empilement de couches.

La couche de liaison transparente peut être incolore ou teintée.

La couche de liaison transparente peut être d'épaisseur d'au plus 0,5mm ou même 0,1mm.

Le système optique peut être plan ou courbé, flexible pour s'adapter aux courbures par exemple d'un vitrage (monolithique ou feuilleté). Il est alors courbé sur le vitrage monolithique ou par exemple au sein dudit vitrage feuilleté.

L'invention concerne également un vitrage feuilleté éventuellement bombé comportant :

- une première feuille de verre additionnelle notamment d'épaisseur de 0,7mm à 4mm
- un intercalaire de feuilletage thermoplastique notamment EVA ou PVB
- une deuxième feuille de verre additionnelle notamment d'épaisseur de 0,7mm à 4mm ou même de moins de 0,7mm ou encore une feuille de plastique comme un polycarbonate ou un PMMA (notamment avec un intercalaire de feuilletage en PU),

les faces principales internes dites F2 et F3 des première et deuxième feuilles de verre additionnelles étant en regard, le système optique tel que décrit précédemment étant de préférence entre les faces F2 et F3 et de préférence dans l'intercalaire de feuilletage.

De préférence, concernant le premier dispositif, le substrat étant polymérique et même le support étant polymérique, occupant tout ou partie de la surface de la première feuille. De préférence le premier élément étant polymérique et même le deuxième élément étant polymérique, occupant tout ou partie de la surface du premier dispositif.

De préférence l'intercalaire feuilletage thermoplastique entoure le chant du système optique (premier et deuxième dispositif).

La tranche du système optique peut être en retrait par rapport à la tranche la plus externe de l'intercalaire de feuilletage (ou de la première feuille).

De préférence les éventuelles feuilles porteuse des couches (substrat, support, première et deuxième éléments) sont de préférence d'épaisseur d'au plus 0,7mm et même d'au plus 0,3 ou 0,2mm. Pour ceux en verre on peut choisir du verre mince (moins de 1mm) et même ultramince ('UTG ' en anglais).

L'une des feuilles de verre additionnelles peut être teintée et l'autre clair ou extraclair. L'intercalaire de feuilletage thermoplastique peut être incolore (clair, extraclair) ou teinté. Pour le substrat et/ou le support ou encore ou pour une feuille de verre additionnelle ou un vitrage d'un vitrage feuilleté et/ou multiple on peut choisir un verre clair ou extra-clair. Un verre clair contient typiquement une teneur pondérale en oxyde de fer de l'ordre de 0,05 à 0,2%, tandis qu'un verre extra-clair contient généralement environ 0,005 à 0,03% d'oxyde de fer.

La feuille de verre additionnelle ou un vitrage d'un vitrage feuilleté et/ou multiple, peut être toutefois teinté par exemple en bleu, vert, gris ou bronze.

Une feuille de verre additionnelle teinté ou un vitrage teinté d'un vitrage feuilleté et/ou multiple, peut présenter de préférence une transmission lumineuse $T_L$ inférieure ou égale à 10% .

Le verre est de préférence de type silico-sodo-calcique mais il peut également être en verre de type borosilicate ou alumino-borosilicate. L'épaisseur du verre est généralement comprise dans un domaine allant de 0,5 mm à 19 mm, de préférence de 0,7 à 9 mm, notamment de 2 à 8 mm, voire de 4 à 6 mm. Le verre est de préférence du type flotté.

L'intercalaire de feuilletage thermoplastique assure une liaison avec un élément rigide ou flexible. Cet intercalaire de feuilletage polymère peut être, notamment, une couche à base de polybutyral de vinyle (PVB), d'éthylène vinylacétate (EVA), de polyéthylène (PE), de polychlorure de vinyle (PVC), d'uréthane thermoplastique, de polyuréthane PU, de ionomère, d'adhésif à base de polyoléfine, de silicone thermoplastique ou en résine pluri ou mono-composants, réticulable thermiquement (époxy, PU) ou aux ultraviolets (époxy, résine acrylique).

L'intercalaire PVB peut être en coin donc avec une section transversale diminuant en forme en coin du haut vers le bas du vitrage feuilleté pour éviter une double image dans le cas d'un affichage tête haute (HUD en anglais), tout particulièrement pour un pare-brise. L'intercalaire PVB est éventuellement acoustique et/ou teinté. L'intercalaire PVB acoustique peut comprendre au moins une couche dite centrale en matériau plastique viscoélastique aux propriétés d'amortissement vibro-acoustique notamment à base de polyvinylbutyral (PVB) et de plastifiant, et comprenant en outre deux couches externes en PVB standard, la couche centrale étant entre les deux couches externes.

Le premier et/ou deuxième vitrage du vitrage feuilleté peut (selon le rendu esthétique, l'effet optique souhaité) être un verre clair (de transmission lumineuse $T_L$ supérieure ou égale à 90% pour une épaisseur de 4mm), par exemple un verre de composition standard sodocalcique le Planilux® de la société Saint-Gobain Glass, ou extra-clair ($T_L$ supérieure ou égale à 91,5% pour une épaisseur de 4 mm), par exemple un verre silico-sodo-calcique avec moins de 0,05% de Fe III ou de $Fe_2O_3$ le verre Diamant® de Saint-Gobain Glass, ou Optiwhite® de Pilkington, ou B270® de Schott, ou d'autre composition décrite dans le document WO04/025334. On peut aussi choisir le verre Planiclear® de la société Saint-Gobain Glass.

Le verre du premier et/ou deuxième vitrage peut être neutre (sans coloration), ou (légèrement) teinté notamment gris ou vert, tel le verre TSA de la société Saint-Gobain Glass. Le verre du premier et/ou deuxième vitrage peut avoir subi un traitement chimique ou thermique du type durcissement, recuit ou une trempe (pour une meilleure résistance mécanique notamment) ou être semi trempé.

La transmission lumineuse $T_L$ peut être mesurée selon la norme ISO 9050 :2003 en utilisant l'illuminant D65, et est la transmission totale (notamment intégrée dans le domaine du visible et pondérée par la courbe de sensibilité de l'œil humain), tenant compte à la fois de la transmission directe et de l'éventuelle transmission diffuse, la mesure étant faite par exemple à l'aide d'un spectrophotomètre muni d'une sphère intégrante, la mesure à une épaisseur donnée étant ensuite convertie le cas échéant à l'épaisseur de référence de 4mm selon la norme ISO 9050 :2003.

Le système optique selon l'invention peut être intégré dans un vitrage notamment monolithique ou feuilleté (plan et/ou bombé), et le système optique forme une bande notamment périphérique sur une portion d'une face principale du vitrage.

On peut utiliser le système optique selon l'invention tel que défini précédemment dans un véhicule ou bâtiment.

Il peut être utilisé notamment comme:

- cloison interne (entre deux pièces ou dans un espace) dans un bâtiment, dans un véhicule terrestre, ferroviaire, maritime ou aérien (entre deux compartiments, dans un taxi, bus, train etc), notamment comme paroi vitrée de douche, baignoire,
- porte vitrée (d'entrée ou de service), fenêtre (simple, double, triple vitrage), plafond, dallage (sol, plafond), porte de WC, une partie vitrée de meuble urbain ou domestique
- vitrage d'un véhicule automobile (voiture, camion, bus, car ..) donc terrestre, ferroviaire, maritime (bateau) : pare-brise, vitrage latéral, toit ..
- écran de projection ou rétroprojection,
- façade de magasin, vitrine notamment d'un guichet.

Naturellement, il peut former tout ou partie d'un vitrage (une cloison et fenêtre type imposte etc.).

Un vitrage de bâtiment peut donc être porteur du système optique tel que décrit précédemment notamment monolithique, double ou triple vitrage (avec ou sans vitrage feuilleté) cloison, fenêtre...

Un vitrage de véhicule notamment routier peut donc porteur du système optique tel que décrit précédemment en particulier pare-brise (le système optique formant bande(s) périphérique(s)) , toit vitré, vitrage latéral (monolithique ou feuilleté) notamment custode. Le vitrage feuilleté selon l'invention, en particulier pour voiture individuelle (parebrise etc) ou camion, peut être courbé (bombé) suivant une ou plus directions notamment pour la première feuille, la deuxième et un rayon de courbure de 10cm à 40cm. Il peut être plan pour les bus, trains, tracteurs.

Le système optique selon l'invention peut être intégré au sein d'un vitrage feuilleté et notamment bombé, est entre des premier et deuxième vitrages respectivement dits vitrages extérieur et intérieur et forme une bande périphérique sur une portion supérieure du vitrage, la tranche dite externe de l'empilement étant masqué de l'extérieur par une première couche périphérique opaque notamment un émail sur le vitrage extérieur (de préférence en face F2), et/ou la tranche dite interne de l'empilement étant masqué de l'intérieur par une deuxième couche périphérique opaque notamment un émail sur le vitrage intérieur (en face F4 par exemple voire face F3).

Le vitrage feuilleté bombé selon l'invention notamment pare-brise ou vitrage latéral, peut avoir une $T_L$ -dans le clair de vitre- qui est de préférence d'au moins 70% et même d'au moins 75% ou même d'au moins 80%.

Le vitrage feuilleté bombé selon l'invention, notamment toit vitré, peut avoir une transmission lumineuse $T_L$ d'au plus 10% et même de 1 à 6%.

Pour un toit automobile, on préfère l'un au moins ou tous les critères suivants :

- une transmission énergétique $T_E$ d'au plus 10% et même de 4 à 6%,
- une réflexion énergétique $R_E$ (de préférence côté face F1) d'au plus 10%, mieux de 4 à 5%
- et une transmission totale de l'énergie solaire TTS <30% et même <26%, même de 20 à 23%.

Le bombage des premier et deuxième vitrages (pare-brise notamment) peut être dans une ou plusieurs directions par exemple décrit dans le document WO2010136702.

Afin de limiter l'échauffement dans l'habitacle ou de limiter l'usage d'air conditionné, l'un des vitrages au moins (de préférence le verre extérieur) est teinté, et le vitrage feuilleté peut comporter également une couche réfléchissant ou absorbant le rayonnement solaire, de préférence en face F4 ou en face F2 ou F3, en particulier une couche d'oxyde transparent électro-conducteur dite couche TCO (en face F4) ou même un empilement de couches minces comprenant au moins une couche TCO, ou d'empilements de couches minces comprenant au moins une couche d'argent (en face F2 ou F3), là où chaque couche d'argent étant disposée entre des couches diélectriques.

Le système optique selon l'invention peut être utilisé en combinaison avec d'autres dispositifs électrocommandables tels que ceux avec des systèmes électroluminescents (ensemble de diodes inorganiques ponctuels DEL, diodes organiques ou OLED, TFEL (à couches minces). Les deux peuvent être en regard ou adjacent au sein d'un vitrage feuilleté (de l'intercalaire de feuilletage.

Le système optique selon l'invention peut être utilisé notamment dans un vitrage feuilleté, en combinaison avec un autre dispositif électrocommandable tel qu'un dispositif électrocommandable électrominescent, en particulier, LED, OLED, TFEL.

D'autres détails et caractéristiques de l'invention apparaîtront de la description détaillée qui va suivre, faite en regard des dessins annexés suivants et dans lesquelles :

La figure 1 représente une vue en coupe schématique d'un système optique 1001 composé d'un premier dispositif électrocommandable 10 qui est à diffusion et couleur variable par cristaux liquides et colorant dichroïque et d'un deuxième dispositif électrocommandable à polarisation variable 100 par cristaux liquides et colorant dichroïque 100 dans un premier mode de réalisation de l'invention.

La figure 2 représente une vue en coupe schématique d'un système optique 1002 composé d'un premier dispositif électrocommandable 10 qui est à diffusion et couleur variable par cristaux liquides et colorant dichroïque et d'un deuxième dispositif électrocommandable à polarisation variable 101 par cristaux liquides et colorant dichroïque 100 dans un deuxième mode de réalisation de l'invention.

La figure 3 représente une vue en coupe schématique d'un système optique 1003 composé d'un premier dispositif électrocommandable 10 qui est à diffusion et couleur variable par cristaux liquides et colorant dichroïque et d'un deuxième dispositif électrocommandable à polarisation variable 102 par cristaux liquides et colorant dichroïque 100 dans un troisième mode de réalisation de l'invention.

La figure 4 représente une vue en coupe schématique d'un système optique 1000 composé d'un premier dispositif électrocommandable 10 qui est à diffusion et couleur variable par cristaux liquides et colorant dichroïque et d'un deuxième dispositif électrocommandable à polarisation variable 100 par cristaux liquides et colorant dichroïque 100 dans un quatrième mode de réalisation de l'invention.

La figure 5 est une vue de face d'électrodes en bandes et deux à deux utilisées dans le deuxième dispositif de la figure 4.

La figure 6 est une vue partielle schématique de principe en perspective du deuxième dispositif de la figure 4 dans un premier état fonctionnel qui est l'état off.

La figure 7 est une vue partielle schématique de principe en perspective du deuxième dispositif de la figure 4 dans un deuxième état qui est un état on à une tension donnée U2.

La figure 8 représente une vue en coupe schématique et de détail de la couche électroactive entre deux électrodes plan- plan du premier dispositif 10 hors champ électrique, illustrant schématiquement l'orientation de certains cristaux liquides et de certains des colorants dichroïques sans champ électrique E1.

La figure 9 représente une vue en coupe schématique et de détail de la couche électroactive entre deux électrodes plan- plan du premier dispositif 10 sous le premier champ électrique E1, illustrant schématiquement l'orientation de certains cristaux liquides et de certains des colorants dichroïques sous ledit premier champ électrique E1.

Les figures 10, 11, 12 montrent en vue de face des images (en noir et blanc) obtenues par microscopie optique en lumière polarisée (MOP) sous polariseur sous un grossissement de x20 (avec une échelle en trait blanc de $50\mu$m) de la première couche électroactive du premier dispositif électrocommandable 10 de la figure 4 (exemple 1) en l'absence dudit premier champ électrique E1.

La figure 13 montre un ensemble de courbes correspondant à la transmission totale TT en fonction de la longueur d'onde entre 380 et 630nm dans une variante du système optique de la figure 4 car P1 est perpendiculaire à b (deuxième dispositif tourné à 90°).

La figure 14 montre un ensemble de courbes correspondant à la transmission diffuse TD en fonction de la longueur d'onde entre 380 et 630nm dans une variante du système optique de la figure 4 car P1 est perpendiculaire à b (deuxième dispositif tourné à 90°).

La figure 15 montre un ensemble de trois courbes correspondant au flou H (%) en fonction de la première tension U1 de 0 à 40V du système optique de la figure 4 (avec U2 égal à 0V).

La figure 16 montre un ensemble de trois courbes correspondant au rapport de la transmission diffuse TD sur la transmission totale TT en fonction de la longueur d'onde entre 380 et 630nm du système optique de la figure 4 (en mode off + off du système optique ).

La figure 17 montre un ensemble de courbes correspondant à la transmission lumineuse intégrée TL en fonction de la première tension U1 de 0 à 40V du système optique de la figure 4 (avec U2 égal à 0V).

La figure 18 montre un ensemble de courbes correspondant à la transmission totale TT en fonction de la longueur d'onde entre 380 et 630nm du système optique de la figure 4 avec P1 parallèle à b.

La figure 19 montre un ensemble de trois courbes correspondant à la transmission diffuse TD en fonction de la longueur d'onde entre 380 et 630nm du système optique de la figure 4 avec P1 parallèle à b .

La figure 20 représente une vue en coupe schématique d'un système optique 1000' composé d'un premier dispositif électrocommandable 10 qui est à diffusion et couleur variable par cristaux liquides et colorant dichroïque et d'un deuxième dispositif électrocommandable à polarisation variable 100' par cristaux liquides et colorant dichroïque dans une variante du quatrième mode de réalisation de l'invention.

La figure 21 représente une vue en coupe schématique d'un système optique 1000a composé d'un premier dispositif électrocommandable 10a qui est à diffusion et couleur variable par cristaux liquides et colorant dichroïque et d'un deuxième dispositif électrocommandable à polarisation variable 100a par cristaux liquides et colorant dichroïque dans un cinquième mode de réalisation de l'invention.

La figure 22 représente une vue en coupe schématique d'un vitrage 2000 porteur un système optique 1000 selon l'invention.

La figure 23 représente une vue en coupe schématique d'un vitrage feuilleté 3000 porteur d'un système optique 1000 selon l'invention.

Les figures 24 et 25 représentent respectivement une vue de face et en coupe schématique d'un vitrage feuilleté 4000 porteur d'un système optique 1000 selon l'invention.

Les éléments sur les figures ne sont pas représentés à l'échelle.

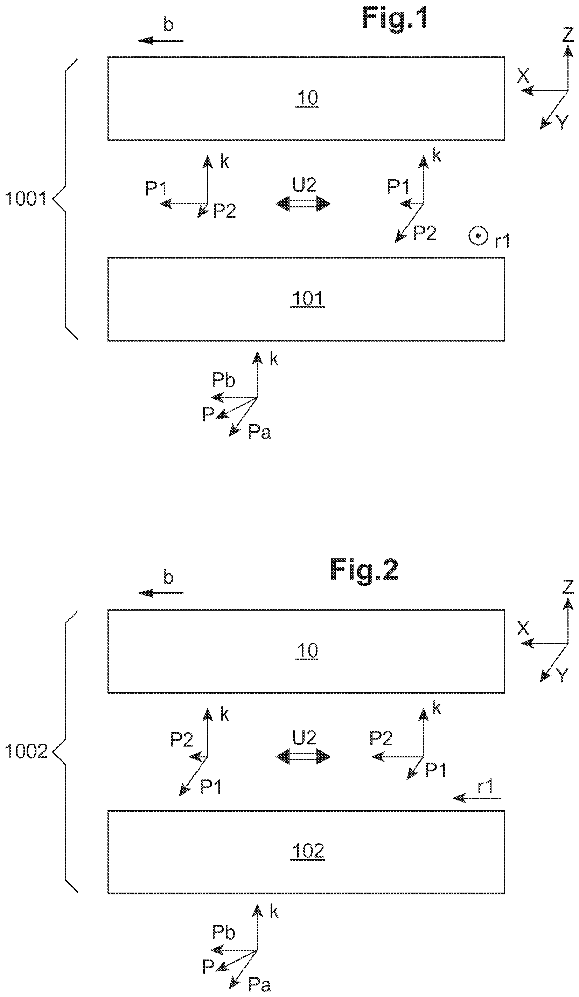

La figure 1 représente une vue en coupe schématique d'un système optique 1001 composé d'un premier dispositif électrocommandable 10 qui est à diffusion et couleur variable par des premiers cristaux liquides et des premiers colorants dichroïques et d'un deuxième dispositif électrocommandable à polarisation variable 101 par des deuxièmes cristaux liquides et des deuxièmes colorants dichroïques dans un premier mode de réalisation de l'invention.

Le premier dispositif électrocommandable 10 est ici caractérisé par une première direction b d'ancrage de surface des premiers cristaux liquides (à l'état éteint).

On définit un repère orthonormé X, Y et Z. b est selon l'axe X.

Le deuxième dispositif électrocommandable 101 est ici caractérisé par une première direction r1 d'ancrage d'une surface des deuxièmes cristaux liquides (à l'état éteint) côté sortie vers le premier dispositif 10 et même par une deuxième direction r2 d'ancrage d'une surface des deuxièmes cristaux liquides côté opposé, donc côté entrée du premier dispositif.

Le deuxième dispositif 101 présente des premier et deuxième états fonctionnels et :

-    dans le premier état fonctionnel qui est l'état éteint ici, à partir d'une lumière incidente non polarisée côté opposé au premier dispositif (représentée schématiquement par des composantes Pa et Pb normales de même intensité, avec k le vecteur de propagation de la lumière suivant Z), le deuxième dispositif 101 est apte à délivrer une lumière de sortie polarisée coté premier dispositif 10 avec une première composante du champ électrique polarisée P1 suivant un axe X et une deuxième composante du champ électrique polarisée P2 suivant un axe Y normal à Y, avec un premier ratio de polarisation défini par

[Math 3]

$$rp1 = \frac{T1}{T1+T2}$$

rp1 étant de préférence d'au moins 70%ou 90%, et même d'au moins 95% T1 étant la transmission totale à une longueur d'onde entre 380 et 800nm suivant X et T2 étant la transmission totale suivant Y à la longueur d'onde entre 380 et 800nm pour une première tension U2a entre les troisième et quatrième électrodes donnée de préférence nulle,

(P1 est donc ultra dominant par rapport à P2)

- et dans le deuxième état fonctionnel qui est ici un état on, de mise sous tension U2 (entre deux électrodes en bandes de préférence coplanaires, deux à deux):

i) à partir d'une lumière incidente non polarisée côté opposé au premier dispositif, le deuxième dispositif 101 étant apte à délivrer une lumière de sortie polarisée côté premier dispositif avec un deuxième ratio de polarisation défini par

[Math 4]

$$rp2 = \frac{T'2}{T'1+T'2}$$

rp2 étant d'au moins 30%, et même d'au moins 50% ou 60% T'1 étant la transmission totale à une longueur d'onde entre 380 et 800nm suivant le premier axe et T'2 étant la transmission totale suivant le deuxième axe à la longueur d'onde entre 380 et 800nm pour une deuxième tension U2b entre les troisième et quatrième électrodes donnée, non nulle, U2b distincte de U2a.P2 est de préférence majoritaire par rapport à P1.

La polarisation de la lumière de sortie du deuxième dispositif peut être elliptique. Naturellement le deuxième dispositif présente alors une multitude d'états fonctionnels à l'état allumé. Il existe en particulier une tension seuil à partir duquel la force d'ancrage des deuxième cristaux liquides est vaincue pour une partie des cristaux liquides et plus on augmente la tension plus les cristaux liquides se réorientent jusqu'à une tension de saturation qui est de préférence d'au plus 80V.

On peut alors avoir un ratio de polarisation $r(U2) = \frac{T2}{T1+T2}$ qui varie en fonction de la tension U2 appliquée.

Le premier dispositif électrocommandable 10 comporte une première couche électroactive qui a une réponse optique dépendant de l'état de polarisation d'une lumière incidente sur le premier dispositif la réponse optique va varier suivant que b est normal ou parallèle à P1.

La figure 2 représente une vue en coupe schématique d'un système optique 1002 composé d'un premier dispositif électrocommandable 10 qui est à diffusion et couleur variable par premiers cristaux liquides et premiers colorants dichroïques et d'un deuxième dispositif électrocommandable à polarisation variable 101 par deuxièmes cristaux liquides et deuxièmes colorants dichroïques 102 dans un deuxième mode de réalisation de l'invention.

Le système 1002 diffère du précédent en ce que le deuxième dispositif 102 (par exemple qui a tourné de 90°) a une direction r1 parallèle à b, autrement dit P1 est normal à b.

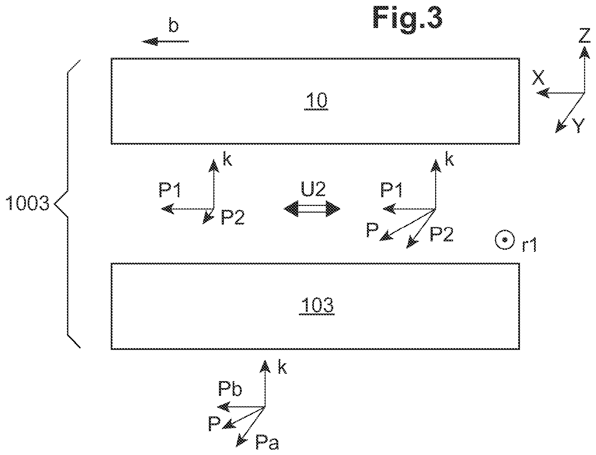

La figure 3 représente une vue en coupe schématique d'un système optique 1003 composé d'un premier dispositif électrocommandable 10 qui est à diffusion et couleur variable par premiers cristaux liquides et premiers colorants dichroïques et d'un deuxième dispositif électrocommandable à polarisation variable 103 par deuxièmes cristaux liquides et deuxièmes colorants dichroïques 103 dans un troisième mode de réalisation de l'invention.

Le système 1003 diffère du premier système 1001 103 en ce que dans le deuxième état on, à partir d'une lumière incidente non polarisée côté opposé au premier dispositif, le deuxième dispositif est apte à fournir une lumière de sortie non polarisée côté premier dispositif.

Les exemples suivants fournissent plus de détails quant à la structure possible des premier et deuxième dispositifs et même leur assemblage.

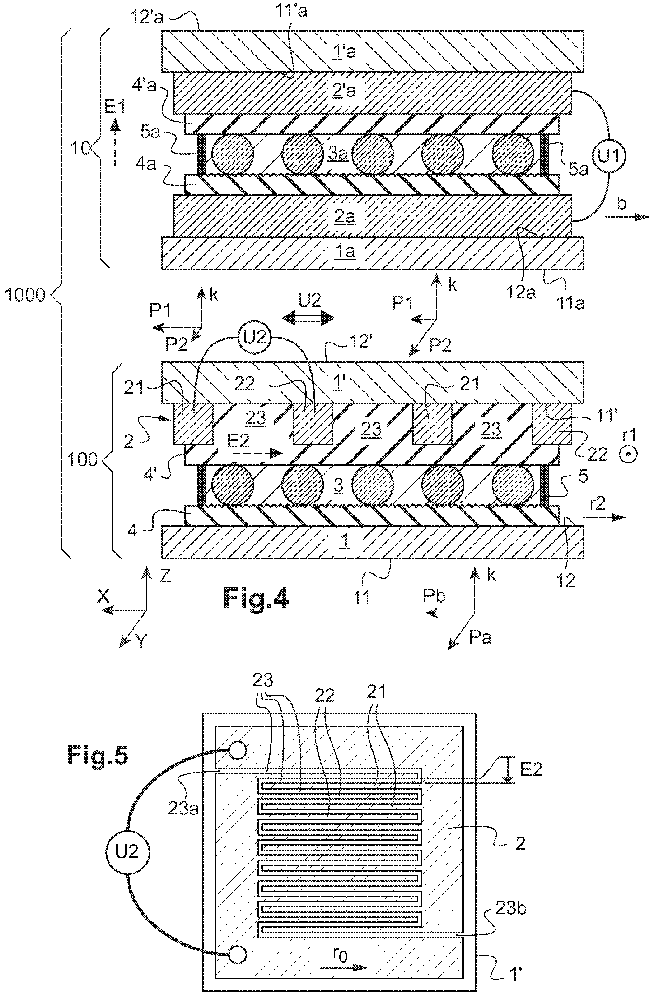

La figure 4 représente une vue en coupe schématique d'un système optique 1000 composé d'un premier dispositif électrocommandable 10 qui est à diffusion et couleur variable par premiers cristaux liquides et premiers colorants dichroïques et d'un deuxième dispositif électrocommandable à polarisation variable 100 par cristaux liquides et colorant dichroïque 100 dans un quatrième mode de réalisation de l'invention.

PREMIER DISPOSITIF

Le premier dispositif 10 comporte un empilement de couches (physiques, solides) dans cet ordre :

- un substrat diélectrique transparent 1'a avec une tranche et des faces principales 11'a et 12'a , ici un verre de 1,1mm

- ou en variante plastique comme du PET
- une première électrode transparente 2'a avec une première surface principale dite surface de liaison SA1 et une surface dite surface SB opposée et une tranche, électrode transparente qui est une couche d'oxyde d'indium et d'étain ITO de résistance carré 100ohm/carré, plus largement entre 5 et 300ohm/carré et pour une neutralité en couleurs, cette électrode ou chaque électrode peut comprendre aussi au moins deux sous-couches minces diélectriques sous la couche ITO et même une ou deux surcouches (diélectriques)
- une première couche d'ancrage planaire normal 4'a transparente (sur la première électrode 2'a)
- en contact avec la première couche d'ancrage 4'a une première couche électroactive diélectrique colorée 3a avec une face principale dite face FA1 côté surface de liaison SB et une face principale dite face FA2 opposée, ici d'épaisseur Ep0 (moins de $20\mu m$) en une première matière comportant :

  - des premiers cristaux liquides
  - des polymères formant un réseau polymérique, les cristaux liquides étant stabilisés par le réseau polymérique,
  - un ou des premiers colorants dichroïques (à l'état dissous) la première matière présentant à partir d'une température dite T1, une mésophase dite P dans laquelle la matière comporte un ensemble de domaines ici submillimétriques qui comportent des défauts topologiques bidimensionnels comme des défauts lignes et sous T1 une mésophase P'

  - des espaceurs étant répartis dans la matière ici des billes de verres
- la couche 3a étant scellée en périphérie par un joint polymérique 5a par exemple en époxy en acrylate ici en cyanoacrylate
- une deuxième couche d'ancrage 4a transparente, ici ancrage unidirectionnelle suivant une direction b parallèle à X
- une deuxième électrode transparente 2a avec côté face A2 une surface principale dite deuxième surface de liaison SA2 et avec une surface dite surface SB2 opposée, notamment deuxième électrode 2a qui est une couche d'ITO de résistance carré 100ohm/carré, plus largement entre 5 et 300ohm/carré et pour une neutralité en couleurs, cette ou chaque électrode peut comprendre aussi au moins deux sous-couches minces diélectriques sous la couche ITO et même une ou deux surcouches
- un support diélectrique transparent 1a de la deuxième électrode 2a avec une tranche et des faces principales 11a et 12a, ici un verre de 1,1mm - ou en variante plastique comme du PET-

Pour l'alimentation électrique via une source électrique des rubans conducteurs (non montrés), notamment métalliques par exemple en cuivre sont fixés par exemple par collage le long et sur des bords périphériques et sont en contact avec les électrodes 2'a, 2a (un ruban par électrode, les rubans étant de préférence sur des bords opposés). Ces rubans sont ensuite reliés à une alimentation électrique. Les tranches des électrodes 2'a, 2a et le chant de la couche électroactive sont de préférence en retrait par rapport aux chants des substrat, support (verres) 1a,1'a rectangulaires ou de toute autre forme. Les épaisseurs des substrat, support (verres) 1a,1'a peuvent être par exemple de 0,7mm à 4mm. Ils peuvent être d'épaisseur de préférence supérieure à $100\mu m$ et d'au plus $300\mu m$ pour une meilleure tenue mécanique de l'ensemble et/ou une facilité de mise en œuvre, de manipulation mais si on veut plus de flexibilité, on peut descendre par exemple jusqu'à $50\mu m$.

Le procédé de fabrication est décrit plus précisément ci-après.

La première couche d'ancrage 4'a est une couche d'octyltrichlorosilane (OTS). Elle est obtenue par immersion du verre avec le deuxième ITO 2' dans une solution d'OTS de 10nM dans du n-heptane pendant 30 minutes, rinçage à l'eau deionisée et séchage sous azote. La première couche d'ancrage 4'a induit un ancrage normal (homéotrope) des cristaux liquides en surface (hors champ électrique), au contact de cette première couche d'ancrage 4'a.

Sous ledit champ électrique E1, le premier dispositif 10 peut présenter seul une transmission diffuse, un flou et une couleur qui varient avec la tension.

La deuxième couche d'ancrage 4a est déposée sur la deuxième couche d'ITO 2a par 'spin coating' d'une solution de polyalcool vinylique (PVA; Sigma-Aldrich; poids moléculaire 27 kDa) de $1\mu m$ environ dans de l'eau déionisée (9,1% en poids de PVA). Avant le dépôt, l'ITO est de préférence ici nettoyé (surfactant) rincé dans de l'eau déionisée et séché sous azote.

La deuxième couche d'ancrage 4a est alors brossée suivant la première direction b pour un ancrage planaire unidirectionnel suivant cette première direction b des premiers cristaux liquides en surface (hors champ) au contact de cette couche 4a.

La première couche électroactive 3a est composée d'un mélange comportant un colorant dichroïque bleu dénommé M412 vendu par la société Mitsui Chemicals ayant comme longueur d'onde de maximum d'absorption 630nm $\pm$10nm.

La première couche électroactive 3a est polymérisée à l'aide d'un monomère ici mésogénique formant le réseau polymérique stabilisant tel que le 1,4-bis[4-(3-acryloyloxyexyloxy) benzoyloxy]-2- méthylbenzene ST03021 (vendu par Synthon Chemicals) de formule $C_{33}H_{32}O_{10}$.

On utilise un mélange de cristaux liquides composé de 4-octyl-4- cyanobiphényl (8CB de la société Tokyo Chemicals) et le 4-cyano-4'-pentylbiphényle (5CB vendu par la société Tokyo Chemicals) (qui n'a pas de phase smectique).

Plus précisément pour réaliser la couche électroactive colorée 3a on forme un mélange avec ces deux types de cristaux liquides 5CB et 8CB, le monomère, le colorant dichroïque, et un photoinitiateur 2,2-diméthoxy-2-phénylacétophénone dit DPMA.

Le mélange contient :

- 95,4% en poids des cristaux liquides 5CB et 8CB dans le ratio 1g de 5CB pour 4g de 8CB
- 2% en poids de monomère ST03021,
- 2% en poids de colorant dichroïque M412,
- 0,6 % en poids de photoinitiateur DPMA.

Le mélange initial avant polymérisation ci-dessus présente une mésophase P' smectique A sous une température d'environ $12\pm2°C$ et une mésophase P nématique entre environ $12\pm2°C$ et environ $43\pm2°C$ (et une phase isotrope au-delà d'environ $43\pm2°C$).

Le mélange final (après polymérisation) présente une mésophase P' smectique A sous une température modifiée T1 d'environ $16\pm2°C$ avec mésophase P nématique entre $16\pm2°C$ et $41\pm2°C$ (et une phase isotrope au-delà d'environ $41\pm2°C$).

On forme une couche de ce mélange coloré dans une épaisseur d'environ 10 $\mu$m entre les couches d'ancrages 4a et 4'a.

Ensuite, l'ensemble est illuminé sous UV ($\lambda$ = 365 nm) pour polymérisation à 3°C (ou au moins sous 12°C), donc en phase smectique A.

La couche électroactive coloré 3a comporte alors en phase nématique des domaines qui sont assimilables aux domaines coniques focaux des phases smectiques A en particulier ici non TFCD. Ces domaines de défauts comprennent chacun deux lignes de défauts (deux défauts lignes), les coniques focales et qui vont par paires, le premier elliptique avec différents degrés d'excentricité et le deuxième hyperbolique. Le nom donné est EHFCD (en anglais).

DEUXIEME DISPOSITIF

Le deuxième dispositif 100 comporte un empilement de couches (solides) dans cet ordre :

- un premier élément diélectrique transparent 1' avec des faces principales 11' et 12' ici un verre de 1,1mm -ou en variante plastique comme du PET
- des troisième et quatrième électrodes transparentes en bandes 2 disjointes comportant des premières bandes 21 et des deuxièmes bandes 22 entre des bandes isolantes 23, - bandes d'ITO de résistance carré 100ohm/carré, plus largement entre 5 et 300ohm/carré
- une troisième couche d'ancrage planaire unidirectionnelle 4' suivant une direction r1 perpendiculaire à b et à X, sur le premier élément diélectrique transparent 1' (face 11') et sur les bandes d'ITO 21 , 22
- en contact avec cette troisième couche d'ancrage 4', une deuxième couche électroactive diélectrique 3 avec une face principale dite face FA3 coté premier dispositif et une face principale dite face FA4 opposée, ici d'épaisseur (moins de 20$\mu$m) en une deuxième matière comportant :

    - des deuxièmes cristaux liquides
    - un ou des deuxièmes colorants dichroïques (à l'état dissous)
    - des espaceurs étant répartis dans la matière ici des billes de verres
    - la couche 3 étant scellée en périphérie par un joint polymérique 5 par exemple en époxy en acrylate ici en cyanoacrylate

- une quatrième couche d'ancrage 4 transparente, ici ancrage unidirectionnelle suivant une direction r2 perpendiculaire à r1 et parallèle à X
- un deuxième élément diélectrique transparent 1 (de la couche 4) avec des faces principales 11 et 12, ici un verre de 1,1mm -ou en variante plastique comme du PET.

Pour l'alimentation électrique via une source électrique, des rubans conducteurs (non montrés), notamment métalliques par exemple en cuivre, sont fixés par exemple par collage le long et sur des bords périphériques et sont en contact avec les électrodes 21, 22 (un ruban par électrode, les rubans étant de préférence sur des bords opposés). Ces rubans sont ensuite reliés à une alimentation électrique. Les tranches des électrodes 21,22 et le chant de la deuxième couche électroactive sont de préférence en retrait par rapport aux chants des éléments (verres) 1,1' rectangulaires ou de toute autre forme. Les épaisseurs des éléments (verres) 1, 1' peuvent être par exemple de 0,7mm à 4mm. Ils peuvent être d'épaisseur de préférence supérieure à $100\mu$m et d'au plus $300\mu$m pour une meilleure tenue mécanique de l'ensemble et/ou une facilité de mise en œuvre, de manipulation mais si on veut plus de flexibilité, on peut descendre par exemple jusqu'à $50\mu$m.

Le procédé de fabrication est décrit plus précisément ci-après.

La troisième couche d'ancrage 4' est donc une couche induisant un ancrage planaire unidirectionnel suivant une direction r1 des deuxième cristaux liquides en surface (hors champ) au contact de cette couche 4'.

La troisième couche d'ancrage 4' est déposée sur les bandes d'ITO 21 et 22 et entre les bandes, dites bandes isolantes 23, sur le premier élément 1' par 'spin coating' d'une solution de polyalcool vinylique (PVA; Sigma-Aldrich; poids moléculaire 27 kDa) de 500 nm environ.

La troisième couche d'ancrage couche 4' est alors brossée suivant la direction r1 parallèle aux bandes 21,22 s'étendant suivant une direction r0 // à r1.

La quatrième couche d'ancrage 4 est donc une couche induisant un ancrage planaire unidirectionnel suivant une direction r2 des deuxième cristaux liquides en surface (hors champ) au contact de cette couche 4.

La quatrième couche d'ancrage 4 est déposée sur le deuxième élément 1 par 'spin coating' d'une solution de polyalcool vinylique (PVA; Sigma-Aldrich; poids moléculaire $M_w \sim$ 27 kDa) de 300 nm environ. La quatrième couche d'ancrage 4 est alors brossée suivant la direction r2 normale à r1.

La deuxième couche électroactive de cristaux liquides 3 est composée des cristaux liquides nématiques E7 (98% en poids) avec un colorant dichroïque noir dénommé S428 vendu par la société Mitsui Chemicals (2% en poids). L'épaisseur de la deuxième couche électroactive est de $10\mu$m.

La figure 5 est une vue de face d'électrodes en bandes 21, 22 et deux à deux utilisées dans le deuxième dispositif de la figure 4.

Par exemple les bandes isolantes 23 forment un arrangement en serpentin et on isole une première zone de couche électroconductrice avec une deuxième zone de la couche par une première portion 23a de la première bande isolante du serpentin et par une dernière portion 23b de la dernière bande isolante du serpentin.

Les bandes électroconductrices 21 et 22 sont parallèles à ro et r1.

On peut prévoir de réaliser cet arrangement de bandes isolantes par retrait d'une couche pleine électroconductrice notamment par faisceau laser femtoseconde par exemple de diamètre $30\mu$m et les bandes étant de $15\mu$m. La limite en épaisseur de bande est donnée par la taille du faisceau laser. La limite de la distance inter-bande est dictée par le déplacement du faisceau laser.

Les premiers et deuxièmes cristaux liquides présentent une anisotropie diélectrique positive ici.

Comme expliqué en relation avec la figure de principe 1, le deuxième dispositif 100 qui reçoit en entrée une lumière polarisée, délivre soit dans le premier état off une lumière polarisée principalement suivant P1 normal à r1 (parallèle à b) soit dans un deuxième état on une lumière polarisée principalement suivant P2 normal à P1 (normal à b).

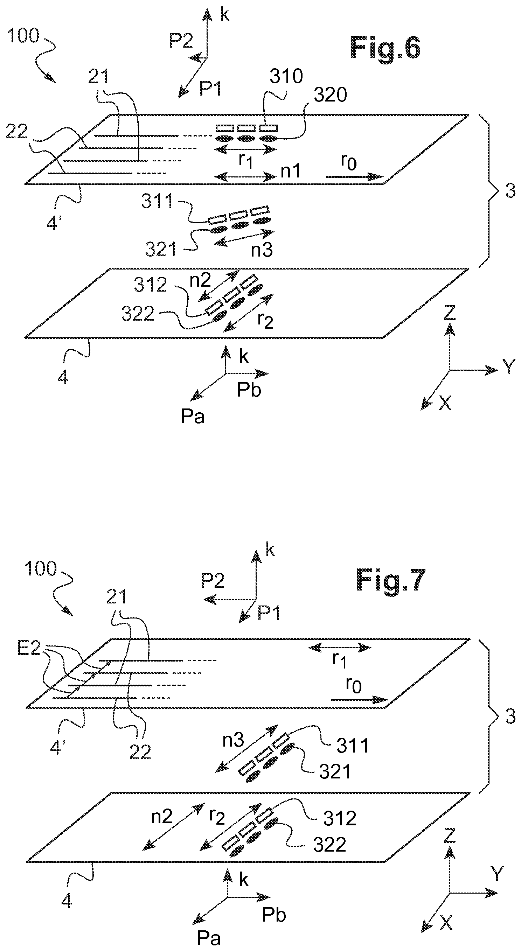

La figure 6 est une vue partielle schématique de principe en perspective du deuxième dispositif de la figure 4 dans le premier état qui est l'état off.

En surface de la quatrième couche d'ancrage 4, les deuxièmes cristaux liquides 312 (définis par le directeur n2) et colorants dichroïques 322 sont (globalement) parallèles à r2.

En surface de la troisième couche d'ancrage 4' antagoniste, les deuxièmes cristaux liquides 310 (définis par le directeur n1) et colorants dichroïques 320 sont (globalement) parallèles à r1.

Cet antagonisme force les deuxièmes cristaux liquides nématiques à subir une déformation de torsion et les deuxièmes colorants dichroïques sont asservis aux nématiques.

Dans l'épaisseur de la deuxième couche électroactive 3 les deuxièmes cristaux liquides 311 (définis par le directeur n3) et deuxièmes colorants dichroïques 321 forment un angle (globalement) avec r1 et r2.

La figure 7 est une vue partielle schématique de principe en perspective du deuxième dispositif de la figure 4 dans le deuxième état qui est un état on à une tension donnée U2.

En surface de la quatrième couche d'ancrage 4, les deuxièmes cristaux liquides 312 (définis par le directeur n2) et colorants dichroïques 322 demeurent (globalement) parallèles à r2.

Dans l'épaisseur de la deuxième couche électroactive 3 les deuxièmes cristaux liquides 311 (définis par le directeur n3) et deuxièmes colorants dichroïques 321 tendent globalement à s'aligner suivant r2.

En sortie, la polarisation P1perpendiuclaire à r1 diminue et peut être quasi éteinte.

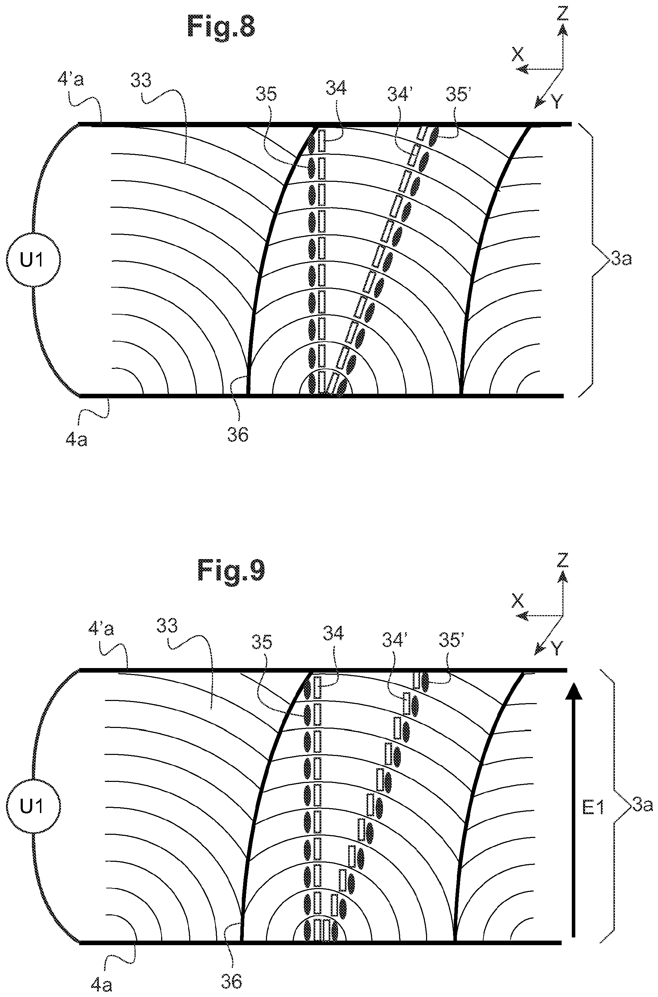

La figure 8 représente une vue en coupe schématique et de détail de la couche électroactive 3entre deux électrodes plan- plan du premier dispositif hors champ électrique, illustrant schématiquement l'orientation de certains premiers cristaux liquides 34 , 34' et de certains des premiers colorants dichroïques 35, 35' sans champ électrique E1.

La figure 8 montre une structure en couches 36 des cristaux liquides avec les colorants dichroiques, structure figée par le réseau polymérique non représenté.

Les couches de cristaux liquides sont courbées en direction de la couche d'ancrage planaire (ici dégénérée) dans une zone centrale 34 et les couches sont planes et parallèles entre elles sur deux zones latérales plus ou moins étendues et qui peuvent être inexistantes.

Dans la première couche électroactive 3a existent des domaines de défauts comprenant chacun deux lignes de défauts (deux défauts lignes), les coniques focales et qui vont par paires, notamment un elliptique (dans le plan X, Y) et l'autre hyperbolique (ligne 36 en trait gras) , ainsi le nom donné est « Elliptic-Hyperbolic focal conic domain » ou EHFCD en anglais.

Une première série de premiers cristaux liquides (des bâtonnets) 34 sont perpendiculaires aux couches d'ancrage 4a 4'a, donc suivant Z . Il en est de même pour certains premiers colorants dichroïques 35 présents dans cette zone.

Une deuxième série de premiers cristaux liquides 34' forment un angle par rapport à cette couche d'ancrage 4a. Il en est de même pour certains autres premiers colorants dichroïques 35'.

La figure 9 représente une vue en coupe schématique et de détail de la couche électroactive entre deux électrodes plan- plan du premier dispositif sous le premier champ électrique E1, illustrant schématiquement l'orientation de certains premiers cristaux liquides 34, 34' et de certains des premiers colorants dichroïques 35, 35' sous ledit premier champ électrique E1.

Sous champ, la deuxième série de premiers cristaux liquides 34' tendent à être également perpendiculaires aux couches d'ancrage 4a 4'a, donc suivant Z. Il en est de même pour certains autres premiers colorants dichroïques 35'.

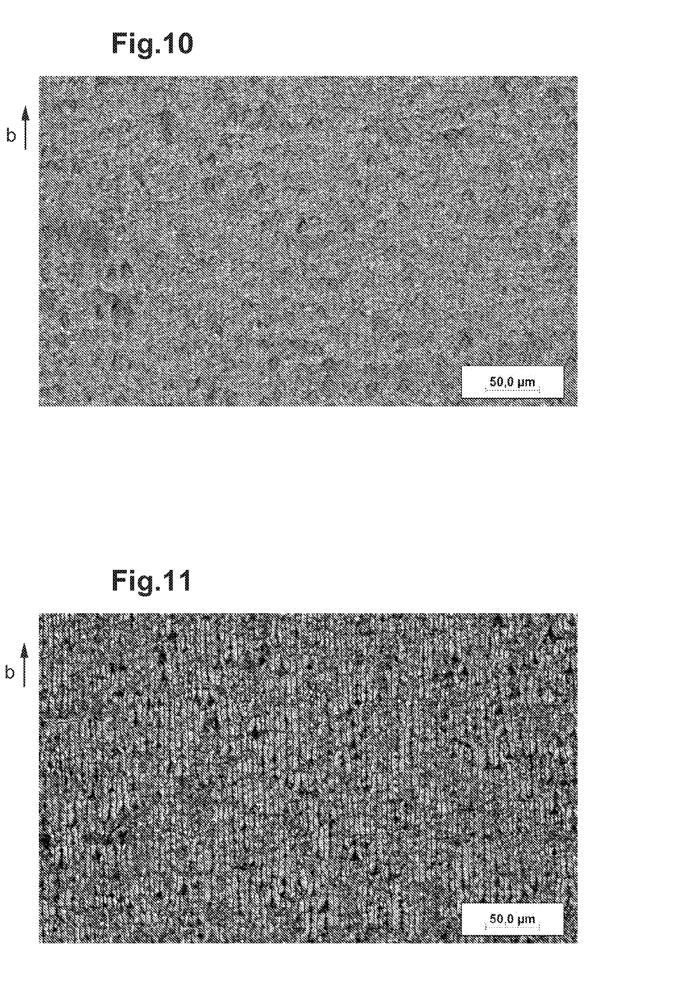

Les figures 10,11,12 montrent en vue de face des images (en noir et blanc) obtenues par microscopie optique en lumière polarisée (MOP) sous polariseur sous un grossissement de x20 (avec une échelle en trait blanc de $50\mu m$) de la première couche électroactive du premier dispositif électrocommandable 10 de la figure 4 (exemple 1) en l'absence dudit premier champ électrique E1.

La figure 10 est pour une lumière polarisée incidente sur le premier dispositif qui présente une polarisation linéaire Pi suivant une direction parallèle à b.

La figure 11 est pour une lumière polarisée incidente sur le premier dispositif qui présente une polarisation linéaire Pi suivant une direction perpendiculaire à b.

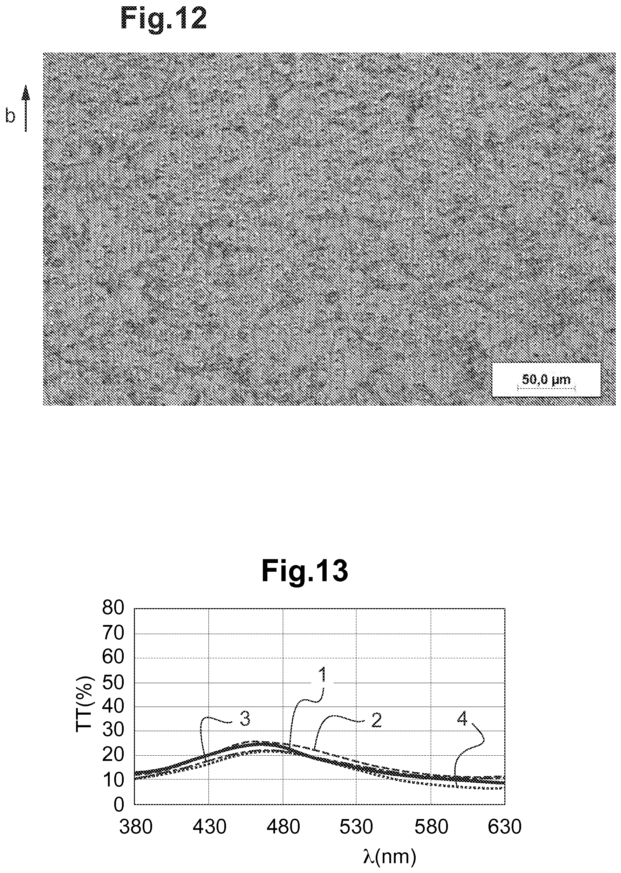

La figure 12 est pour une lumière polarisée incidente sur le premier dispositif qui présente une polarisation linéaire Pi suivant une direction perpendiculaire à b et en rajoutant un analyseur perpendiculaire à cette polarisation Pi .

On observe que les domaines coniques focaux EHFCD forment un réseau linéaire parallèle à la direction b.

La figure 13 montre un ensemble de courbes correspondant à la transmission totale TT en fonction de la longueur d'onde entre 380 et 630nm dans une variante du système optique de la figure 4 car P1 est perpendiculaire à b (deuxième dispositif tourné à 90°) La courbe 1 est le mode off+off (avec une première tension U1 à 0V et une deuxième tension U2 à 0V).

La courbe 2 est le mode on +off (avec une première tension U1 à 40V et une deuxième tension U2 à 0V).

La courbe 3 est le mode off +on (avec une première tension U1 à 0V et une deuxième tension U2 à 40V).

La courbe 4 est le mode on+on (avec une première tension U1 à 40V et une deuxième tension U2 à 40V).

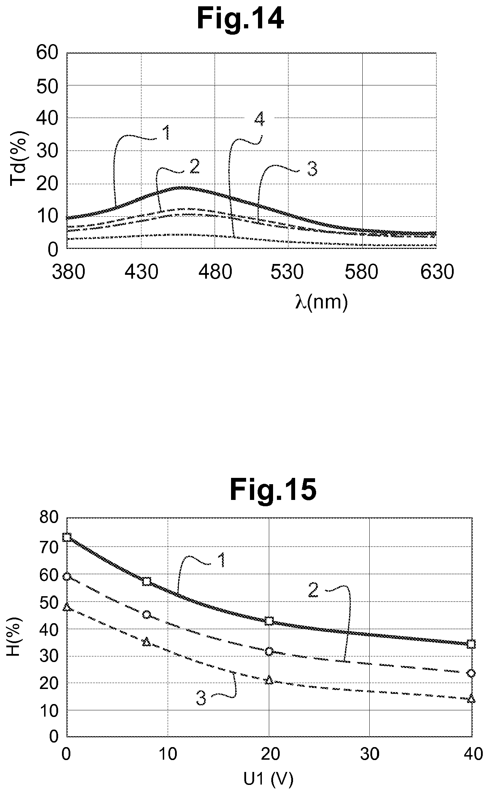

La figure 14 montre un ensemble de courbes correspondant à la transmission diffuse TD en fonction de la longueur d'onde entre 380 et 630nm dans une variante du système optique de la figure 4 car P1 est perpendiculaire à b (deuxième dispositif tourné à 90°). La courbe 1 est le mode off+off du système optique (avec une première tension U1 à 0V et une deuxième tension U2 à 0V).

La courbe 2 est le mode on +off du système optique (avec une première tension U1 à 40V et une deuxième tension U2 à 0V).

La courbe 3 est le mode off +on du système optique (avec une première tension U1 à 0V et une deuxième tension U2 à 40V).

La courbe 4 est le mode on+on du système optique (avec une première tension U1 à 40V et une deuxième tension U2 à 40V)

La figure 15 montre un ensemble de trois courbes correspondant au flou H (%) en fonction de la première tension U1 de 0 à 40V du système optique de la figure 4 (avec U2 égal à 0V).

Le flou H qui est le rapport entre la transmission lumineuse intégrée sur la transmission diffuse TD.

La courbe 1 est le flou mesuré lorsque P1 est // à b.

La courbe 2 est le flou mesuré lorsque la lumière incidente n'est pas polarisée.

La courbe 3 est le flou mesuré lorsque P1 est normal à b.

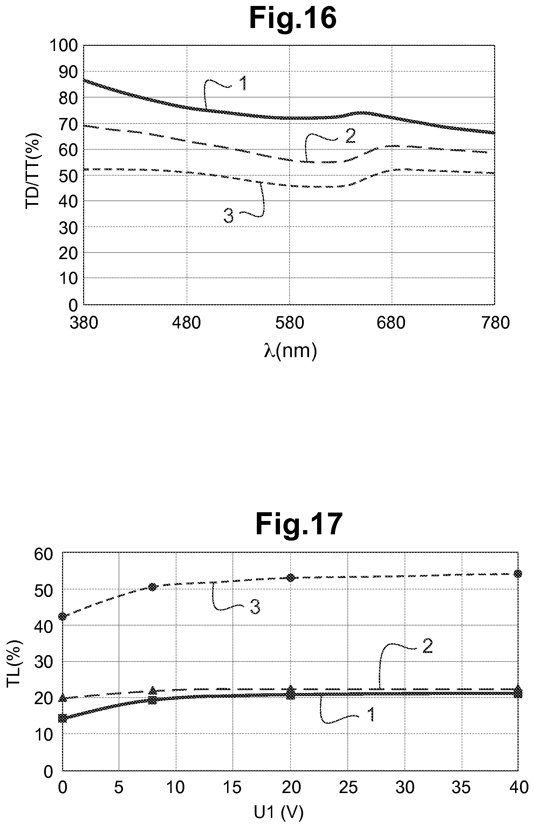

La figure 16 montre un ensemble de trois courbes correspondant au rapport de la transmission diffuse TD sur la transmission totale TT en fonction de la longueur d'onde entre 380 et 630nm du système optique de la figure 4 (en mode off + off du système optique ).

La figure 17 montre un ensemble de courbes correspondant à la transmission lumineuse intégrée TL en fonction de la première tension U1 de 0 à 40V du système optique de la figure 4 (avec U2 égal à 0V).

La courbe 1 est la TL mesurée lorsque P1 est // à b.

La courbe 2 est la TL mesurée lorsque la lumière incidente n'est pas polarisée.

La courbe 3 est la TL mesuré lorsque P1 est normal à b.

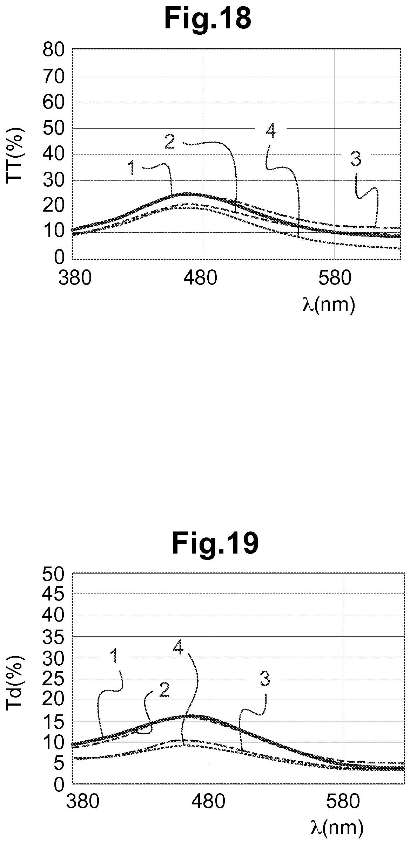

La figure 18 montre un ensemble de courbes correspondant à la transmission totale TT en fonction de la longueur d'onde entre 380 et 630nm du système optique de la figure 4 avec P1 parallèle à b.

La courbe 1 est le mode off+off (avec une première tension U1 à 0V et une deuxième tension U2 à 0V).

La courbe 2 est le mode on +off (avec une première tension U1 à 40V et une deuxième tension U2 à 0V).

La courbe 3 est le mode off +on (avec une première tension U1 à 0V et une deuxième tension U2 à 40V).

La courbe 4 est le mode on+on (avec une première tension U1 à 40V et une deuxième tension U2 à 40V).

La transmission totale varie peu d'une courbe à l'autre.

La figure 19 montre un ensemble de trois courbes correspondant à la transmission diffuse TD en fonction de la longueur d'onde entre 380 et 630nm du système optique de la figure 4 avec P1 parallèle à b

La courbe 1 est le mode off+off (avec une première tension U1 à 0V et une deuxième tension U2 à 0V).

La courbe 2 est le mode on +off (avec une première tension U1 à 40V et une deuxième tension U2 à 0V).

La courbe 3 est le mode off +on (avec une première tension U1 à 0V et une deuxième tension U2 à 40V).

Concernant l'exemple 1 décrit en relation avec la figure 4 (r1 perpendiculaire à b), pour mesurer la variation de couleur on calcule la clarté L* et les paramètres a* et b* mesurées à partir de la transmission totale ainsi que la TL intégrée calculée à partir de la transmission totale (TL1) ou de la transmission diffuse (TL2) , et le flou H qui est le rapport TL2/TL1. On utilise un spectromètre type Perkin Elmer Lambda 950. Les mesures et calculs sont consignés dans la table 1

[Table 1]

| U2/U1 (V) | TL1(%) | TL2 ((%) | H (%) | L | a | b |
|---|---|---|---|---|---|---|
| 0/0 | 9,7 | 7,1 | 73,7 | 37,3 | -4,2 | -21,3 |
| 0/40 | 13,7 | 4,5 | 32,8 | 43,8 | -3,8 | -11,3 |
| 40/0 | 14,3 | 7,8 | 54,4 | 44,7 | -4,4 | -16,5 |
| 40/40 | 16,6 | 5,2 | 31,1 | 47,7 | -4,1 | -12,1 |

L'écart colorimétrique deltaE (entre les cas 0V/0V et 0V/40V) est de 11,9.

Concernant une variante (r1 parallèle à b), pour mesurer la variation de couleur on calcule la clarté L* et les paramètres a* et b* partir de la transmission totale ainsi que la TL intégrée calculée à partir de la transmission totale (TL1) ou de la transmission diffuse (TL2) , et le flou H qui est le rapport TL2/TL1. On utilise un spectromètre type Perkin Elmer Lambda 950.

Les mesures et calculs sont consignés dans la table 2

[Table 2]

| U2/U1 (V) | TL1(%) | TL2 (%) | H (%) | L | a | b |
|---|---|---|---|---|---|---|
| 0/0 | 13,5 | 5,8 | 43,0 | 43,4 | -5,0 | -13,2 |
| 0/40 | 14,4 | 2,1 | 14,6 | 44,9 | -1,9 | -12,1 |
| 40/0 | 12,2 | 8,7 | 71,3 | 41,5 | -1,2 | -22,3 |
| 40/40 | 16 | 6,6 | 41,3 | 46,9 | -1,4 | -14,4 |

L'écart colorimétrique deltaE (entre les cas 0V/0V et 0V/40V) est de 3,6.

On a défini un premier ratio de polarisation pour la polarisation P1 (normale à r1) comme :

$$r1\,(U2) = \frac{T1}{T1+T2}$$

On a défini un deuxième ratio de polarisation pour la polarisation P2 (parallèle à r1 et normale à P1) comme :

$$r2\,(U2) = \frac{T2}{T1+T2}$$

T1 étant la transmission totale moyennée entre 380 et 640nm suivant l'axe de P1 et T2 étant la transmission totale suivant l'axe de P2 moyennée entre 380 et 640nm. On a utilisé un spectromètre type Perkin Elmer Lambda 950.

L'évolution des ratios r1 et r2 en fonction de la tension U2 appliquée est indiquée dans la table 3.

[Table 3]

| U2 (V) | $r_1$ (%) | $r_2$ (%) |
|---|---|---|
| 0 | 99 | 1 |
| 20 | 49 | 51 |
| 40 | 32 | 68 |
| 60 | 26 | 74 |
| 80 | 22 | 78 |

A tension nulle, la polarisation est essentiellement suivant P1.

Au fur et à mesure que la tension augmente la composante P2 augmente.

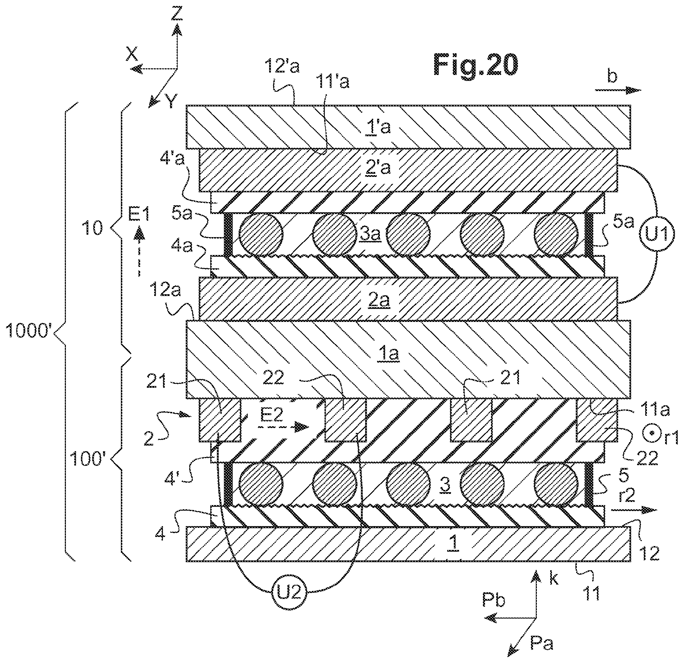

La figure 20 représente une vue en coupe schématique d'un système optique 1000' composé d'un premier dispositif électrocommandable 10 qui est à diffusion et couleur variable par cristaux liquides et colorant dichroïque et d'un deuxième dispositif électrocommandable à polarisation variable 100' par cristaux liquides et colorant dichroïque dans une variante du quatrième mode de réalisation de l'invention.

Le système optique diffère du système de la figure 4 en ce que le support 1'a forme support commun pour les premier et deuxième dispositifs (porteur de toutes les électrodes sur ses deux faces principales).

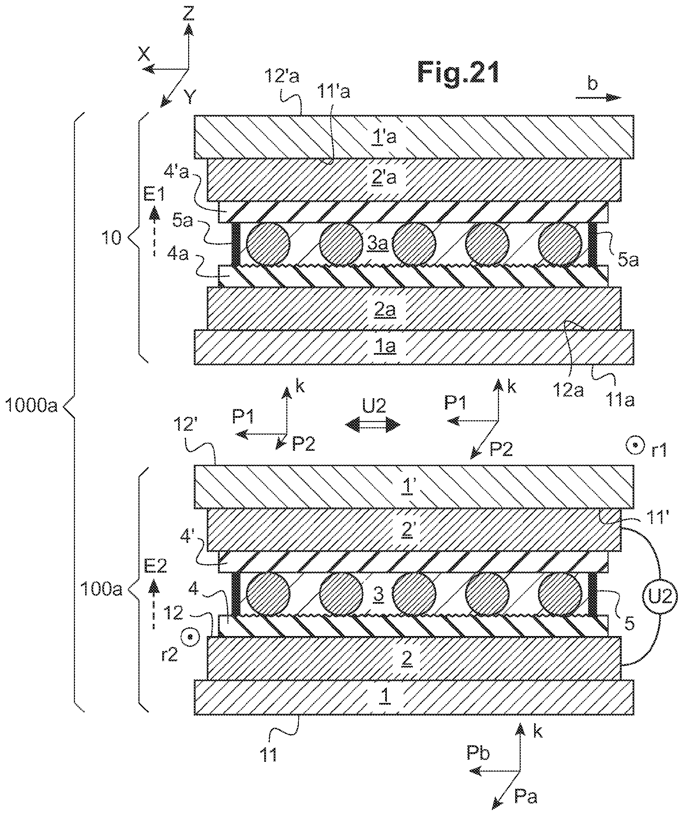

La figure 21 représente une vue en coupe schématique d'un système optique 1000a composé d'un premier dispositif électrocommandable 10a qui est à diffusion et couleur variable par cristaux liquides et colorant dichroïque et d'un deuxième dispositif électrocommandable à polarisation variable 100a par cristaux liquides et colorant dichroïque dans un cinquième mode de réalisation de l'invention.

Le système optique 1000a diffère du système 1000 de la figure 4 en ce que :

- les troisièmes et quatrième électrodes 2 et 2' sont plan plan (non coplanaires)
- r1 forme un angle de 0° avec r2.

Il en résulte qu'à l'état on, la lumière de sortie du deuxième dispositif n'est pas polarisée.

EXEMPLES D'ASSEMBLAGE

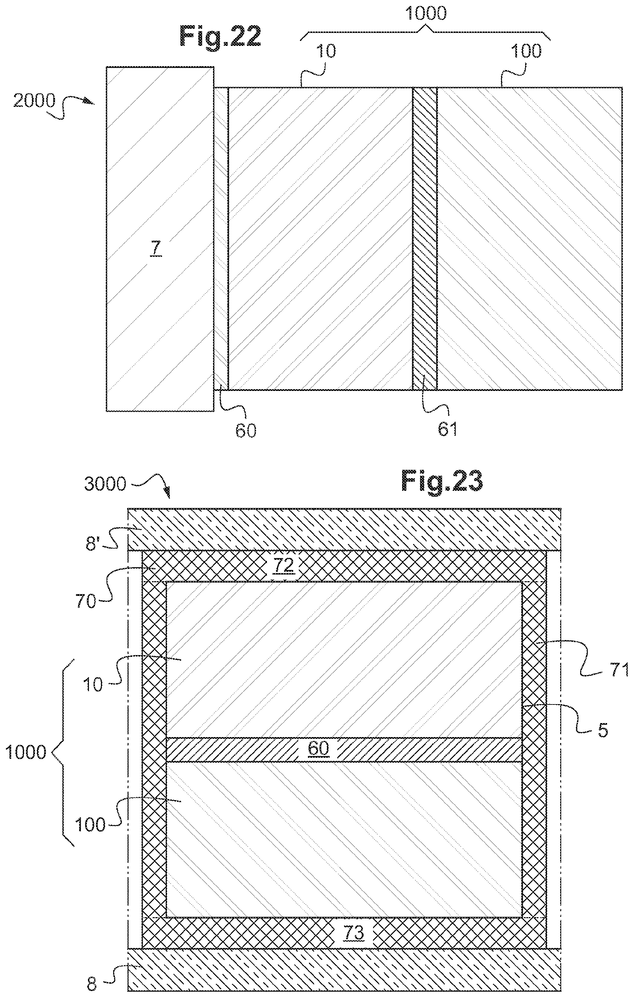

La figure 22 représente une vue en coupe schématique d'un ensemble vitré 2000 comportant une feuille transparente 7 (toute épaisseur possible) porteuse d'un système optique 1000 selon l'invention.

Le premier dispositif 10 est collé par une colle optique 60 à la feuille transparente 7, de verre ou plastique (rigide par exemple), et également est collé par une colle optique 61 au deuxième dispositif 100.

Par exemple il s'agit d'une cloison (position verticale).

L'ensemble peut faire partie d'un vitrage multiple (double ou triple vitrage). Pour un double vitrage, le système 1000 peut être coté face F1 (face extérieure par convention), F2, F3; F4 (face intérieure par convention). Pour un triple vitrage, l'empilement peut être coté face F1 (face extérieure), F2 , F3; F4 , F5 , F6 (face extérieure). La feuille 7 peut être de même dimension ou de plus grande taille que le système 1000.

L'ensemble vitré 2000 peut être :

- sur la face de préférence externe d'une paroi de douche ou l'élément 7 est une paroi de douche
- ou sur la face de préférence interne (face 'F4') d'un vitrage bombé de véhicule notamment automobile: toit, vitrage latéral, pare-brise, lunette ou l'élément 7 est le vitrage bombé

En particulier l'ensemble vitré 2000 peut servir d'écran de projection.

La figure 23 représente une vue en coupe schématique d'un vitrage feuilleté 3000 porteur un système optique 1000 selon l'invention comportant le premier dispositif 10 lié avec le deuxième dispositif 100 par une colle optique 60.

Le vitrage feuilleté 3000 comporte :

- une première feuille additionnelle de verre 8, transparente
- un intercalaire de feuilletage thermoplastique 70 notamment EVA ou PVB
- une deuxième feuille additionnelle de verre 8' ou de plastique transparente les faces principales internes dites F2 et F3 des première et deuxième feuilles additionnelles étant en regard, le système optique 1000 étant entre les faces F2 et F3 et au sein de l'intercalaire de feuilletage submillimétrique ou d'au plus 2mm

Lors de la fabrication on peut utiliser trois feuillets d'intercalaire : deux feuillets pleins 72, 73 contre les faces internes des feuilles 8, 8' et un feuillet central 71 avec une ouverture pour loger le système 1000. Après feuilletage l'interface entre feuillets (symbolisé en pointillés) n'est pas forcément discernable. On préfère que l'ouverture soit fermée plutôt que totalement débouchante sur un côté. Ainsi tout le chant du système 1000 est entouré d'intercalaire de feuilletage 70. Naturellement pour l'alimentation électrique, de la connectique peut sortir du système 1000 et même dépasser sur un ou plusieurs côtés des chants des vitrages.

Alternativement, on peut utiliser que deux feuillets d'intercalaires le feuillet central évidé n'étant pas nécessaire si le système 1000 est suffisamment mince par exemple d'épaisseur d'au plus 0,2mm.

L'une des feuilles 8 ou 8' peut être incolore ou teinté (gris, vert, bronze etc) et l'autre des vitrages clair ou extraclair 8' ou 8. Un des premiers feuillets intercalaires peut être teinté (gris, vert, bronze etc) et le ou les autres clair ou extraclair. L'une des feuilles 8 ou 8' peut être remplacée par une feuille plastique comme un polycarbonate ou un PMMA (notamment avec un intercalaire de feuilletage en PU).

Le chant de l'intercalaire de feuilletage 70 peut être en retrait (d'au plus 5mm par exemple) du chant des feuilles 8,8'.

Le système 1000 couvre par exemple la quasi-totalité des faces principales des feuilles 8 et même ici est centré. Il y a la même largeur de PVB de part et d'autre du système 1000 .

Les feuilles 8, 8' sont planes ou bombées, le système 1000 pouvant s'adapter à la ou aux courbures des feuilles de verre alors bombées 8,8'.

Le système optique 1000 peut être une cloison ou encore un toit de véhicule. Par exemple pour un toit automobile :

- la feuille 8 est la plus extérieure et bombé, qui est éventuellement teinté, par exemple de 3mm
- la feuille 8' est la plus intérieure, bombée, de préférence clair ou extraclair, par exemple de 3mm ou plus mince
- l'intercalaire de feuilletage 70 est en PVB qui peut être acoustique notamment bicouche ou tricouche (feuillet 71 ou 72 ou 73).

Le toit peut donc être aussi de couleur variable par exemple de bleu foncé à bleu clair avec la tension U1 ou U2.

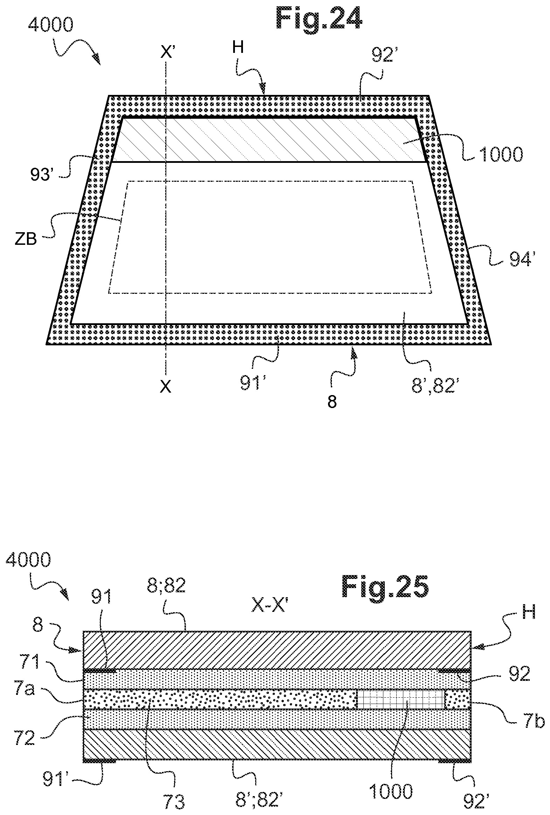

Les figures 24 et 25 représentent respectivement une vue de face et en coupe schématique d'un vitrage feuilleté porteur d'un système optique 1000 selon l'invention. Le vitrage feuilleté 4000 diffère du précédent 3000 en ce que le système optique 1000 couvre une portion de surface de la feuille 8, en particulier une bande périphérique par exemple le long d'un bord longitudinal H supérieur sur quasi toute la longueur du vitrage feuilleté.

Il s'agit par exemple un pare-brise de véhicule automobile.

Ce système optique 1000 en bande est dans une zone marginale dans laquelle les critères de TL et d'absence de flou sont plus libres que dans la zone centrale ZB.

Ce système optique 1000 en bande peut donc être aussi de couleur variable par exemple de bleu foncé à bleu clair avec la tension.

Comme montré en figure 25 (vue de coupe), la largeur 7a d'intercalaire central 73 entre le système optique 1000 et le bord longitudinal inférieur B est plus grande que la largeur 7b d'intercalaire central 73 entre le système optique 1000 et le bord longitudinal supérieur H.

En variante ou cumulativement, elle peut être présente le long d'un bord longitudinal B inférieur du pare-brise, sur toute la longueur ou une portion de longueur.

Comme montré en figure 24 (vue de face côté intérieur du véhicule), le pare-brise comprend un premier cadre opaque par exemple en émail (noir ou autre) 91' à 94' sur les bords latéraux et longitudinaux de la face libre (F4) 82' de la feuille interne 8' et un deuxième cadre opaque par exemple en émail (noir ou autre) 91 à 94 sur les bords latéraux et longitudinaux de la face libre (F1) 82 de la feuille externe 8.

La tranche du système optique 1000 qui est côté bord longitudinal inférieur, et même celles côté bords latéraux peut être (en face de) entre les couches 92, 92', 93, 93', 94, 94' des cadres émail. Par exemple les connectiques et autres bandes d'amenée de courant (pour U1 et U2) peuvent être également masquées par ces couches 92, 92', 93, 93', 94, 94'.

En variante, il s'agit d'un toit automobile par exemple avec le verre externe 8 qui est teinté et/ou le PVB 71 qui est teinté et le système optique 1000 qui couvre même sensiblement toute la face principale des verres 8, 8'.

## Revendications

**1.** Système optique à cristaux liquides (1000, 1000', 1001, 1002, 1003, 1000a) comportant :

- un dispositif électrocommandable à diffusion variable (10), dit premier dispositif, comportant un empilement de couches suivant:

- une première électrode (2'a) transparente avec une surface principale dite première surface de liaison SA1 et une surface dite surface externe SB opposée

- une deuxième électrode (2a) transparente avec une surface principale dite deuxième surface de liaison SA2 et avec une surface externe SB2 opposée, avec un premier champ électrique E1 entre les première et deuxième électrodes

- une première couche électroactive diélectrique (3a) avec une face principale dite face FA1 côté première surface de liaison SA1 et une face principale dite face FA2, en une première matière comportant :
- des premiers cristaux liquides,
- des polymères formant un réseau polymérique, les premiers cristaux liquides étant stabilisés par le réseau polymérique,

la première matière présente à partir d'une température dite T1, une mésophase dite P dans laquelle la première matière comporte un ensemble de domaines qui comportent des défauts topologiques bidimensionnels,

système optique étant tel que la première matière comporte au moins un premier colorant dichroïque, et que la première couche électroactive (3a) a une réponse optique dépendant de l'état de polarisation d'une lumière incidente sur le premier dispositif,

et que le système optique comporte en face à face avec le premier dispositif , un dispositif à polarisation variable, électrocommutable, dit deuxième dispositif (100, 100', 100a, 101, 102) le deuxième dispositif comportant :

- des troisième et quatrième électrodes transparentes (2,2') avec un deuxième champ électrique E2 entre les troisième et quatrième électrodes

- une deuxième couche électroactive (3) en une deuxième matière avec une face principale FA3 coté troisième électrode (2) et une face principale FA4 opposée comportant :

- des deuxièmes cristaux liquides qui sont nématiques
- des deuxièmes colorants dichroïques,

et que la troisième électrode (2, 21) s'étend entre la deuxième couche électroactive (3) et le premier dispositif (10).

2. Système optique à cristaux liquides (1000, 1000', 1001, 1002, 1003, 1000a) selon la revendication précédente **caractérisé en ce que** le deuxième dispositif est dénué de films polariseurs statiques.

3. Système optique à cristaux liquides (1000, 1000', 1001, 1002, 1003, 1000a) selon l'une des revendications précédentes **caractérisé en ce que** le premier champ électrique E1 est alternatif et le deuxième champ électrique E2 est alternatif, et de préférence les première et deuxième électrodes (4'a, 4a) sont dans des plans distincts, et les premiers cristaux liquides ont une anisotropie diélectrique positive.

4. Système optique à cristaux liquides (1000, 1000', 1001, 1002, 1003, 1000a) selon l'une des revendications précédentes **caractérisé en ce que** le deuxième dispositif (100) présente des premier et deuxième états fonctionnels et :

- dans le premier état fonctionnel, à partir d'une lumière incidente non polarisée côté opposé au premier dispositif (10), le deuxième dispositif est apte à délivrer une lumière de sortie côté premier dispositif avec une première composante du champ électrique P1 suivant un premier axe et une deuxième composante du champ électrique P2 suivant un deuxième axe normal au premier axe, avec un premier ratio de polarisation défini par :

[Math 5]

$$rp1 = \frac{T1}{T1+T2}$$

rp1 étant d'au moins 70%, ou même d'au moins 90%, T1 étant la transmission totale à une longueur d'onde entre 380 et 800nm suivant le premier axe et T2 étant la transmission totale suivant le deuxième axe à la longueur d'onde entre 380 et 800nm pour une première tension U2a entre les troisième et quatrième électrodes donnée de préférence nulle

- et dans le deuxième état :

soit i) à partir d'une lumière incidente non polarisée côté opposé au premier dispositif, le deuxième dispositif étant apte à délivrer une lumière de sortie côté premier dispositif avec un deuxième ratio de polarisation défini par :

[Math 6]

$$rp2 = \frac{T'2}{T'1+T'2}$$

rp2 étant d'au moins 30%, et même d'au moins 50%
T'1 étant la transmission totale à une longueur d'onde entre 380 et 800nm suivant le premier axe et T'2 étant la transmission totale suivant le deuxième axe à la longueur d'onde entre 380 et 800nm pour une deuxième tension U2b entre les troisième et quatrième électrodes donnée, éventuellement nulle, U2b distincte de U2a soit j) à partir d'une lumière incidente non polarisée côté opposé au premier dispositif, le deuxième dispositif étant apte à fournir une lumière de sortie non polarisée côté premier dispositif, l'un des premier et deuxième états étant à l'état éteint, l'autre des premier et deuxième états étant à un état allumé.

5. Système optique à cristaux liquides (1000, 1000', 1001, 1002, 1003) selon l'une des revendications précédentes **caractérisé en ce que** les troisième et quatrième électrodes sont coplanaires, formant une alternance de premières et deuxièmes bandes électroconductrices (21, 22) à des potentiels distincts, premières et deuxièmes bandes électroconductrices allongées selon une direction r0, et **en ce que** le deuxième dispositif avec de préférence des deuxièmes cristaux liquides nématiques torsadés à l'état off du deuxième dispositif, comporte :

- une couche d'ancrage planaire unidirectionnelle selon une direction r1 (4') en contact avec la face FA3 de la deuxième couche électroactive (3) et sur les troisième et quatrième électrodes
- et une autre couche d'ancrage planaire unidirectionnelle selon une direction r2 (4), de préférence distincte de r1, en contact avec la face FA4 de la deuxième couche électroactive (3).

6. Système à cristaux liquides (1000, 1000', 1001, 1002, 1003) selon la revendication 5 **caractérisé en ce que** r1 forme un angle de 90°±15° et mieux de 90°±5° avec r2 :

- r0 forme un angle d'au plus 15° et même d'au plus 5° avec r1 et les deuxièmes cristaux liquides ont une anisotropie diélectrique positive
- ou r0 forme un angle de 90°±15° et mieux de 90°±5° avec r1 et les deuxièmes cristaux liquides ont une anisotropie diélectrique négative.

7. Système optique à cristaux liquides (1000, 1000', 1001, 1002) selon l'une des revendications précédentes **caractérisé en ce que** le deuxième dispositif (100,100', 101,102) dans un premier état fonctionnel qui est l'état off, est apte à délivrer une lumière polarisée avec une polarisation P1 et dans un deuxième état fonctionnel qui est l'état on est apte à délivrer une lumière polarisée avec une deuxième polarisation P2, en particulier P1 est normale à r1 et P2 parallèle à r1 .

8. Système optique à cristaux liquides selon l'une des revendications 1 à 7 **caractérisé en ce que** le deuxième dispositif, dans un premier état fonctionnel qui est l'état off, est apte à délivrer une lumière avec une polarisation P1 en particulier normale à r1, le premier dispositif comporte une couche d'ancrage directionnelle (2a) suivant une première direction b sur la face FA1 ou de préférence sur la face FA2, le deuxième dispositif est agencé tel que P1 formant un angle avec b de 0°±20° ou même 0±5°.

9. Système optique à cristaux liquides selon l'une des revendications 1 à 7 **caractérisé en ce que** le deuxième dispositif, dans un premier état fonctionnel qui est l'état off, est apte à délivrer une lumière polarisée avec une polarisation P1 en particulier normale à r1, le premier dispositif comporte une couche d'ancrage directionnelle (2a) suivant une première direction b sur la face FA1 ou de préférence sur la face FA2, le deuxième dispositif (100) est agencé tel que P1 formant un angle avec b de 90°±20° ou même 90°±5°.

**EP 4 413 420 B1**

10. Système optique à cristaux liquides selon l'une des revendications 1 à 4 **caractérisé en ce que** la deuxième couche électroactive est entre les troisième et quatrième électrodes et **en ce que** le deuxième dispositif comporte :

- une couche d'ancrage planaire unidirectionnelle selon une direction r1 sur la face principale FA3 de la deuxième couche électroactive et sur la troisième électrode
- et une autre couche d'ancrage planaire unidirectionnelle, sur la face principale FA4 de la deuxième couche électroactive et sur la quatrième électrode

**en ce que** :

- r1 forme un angle d'au plus 15° et même d'au plus 5° avec r2, les deuxièmes cristaux liquides ont une anisotropie diélectrique négative, l'orientation des deuxièmes cristaux liquides dans l'épaisseur de la deuxième couche électroactive à l'état off du deuxième dispositif est majoritairement homéotrope
- ou r1 forme un angle d'au plus 15° et même d'au plus 5° avec r2, les deuxièmes cristaux liquides ont une anisotropie diélectrique positive,
- ou r1 forme un angle de 90°±15° et mieux de 90°±5° avec r2, les deuxièmes cristaux liquides ont une anisotropie diélectrique positive.

11. Système optique à cristaux liquides (1000, 1000', 1001, 1002) selon l'une des revendications précédentes **caractérisé en ce que** le deuxième dispositif, dans un premier état fonctionnel qui est de préférence l'état off, est apte à délivrer une lumière avec une polarisation P1 en particulier normale à r1

- dans le premier état fonctionnel, le flou en sortie du premier dispositif est d'au moins 10% supérieur au flou obtenu avec une lumière incidente non polarisée en entrée du premier dispositif
- et de préférence dans un deuxième état fonctionnel, qui est de préférence l'état on du deuxième dispositif, le flou en sortie du premier dispositif est d'au moins 10% inférieur au flou obtenu avec une lumière incidente non polarisée en entrée du premier dispositif.

12. Système optique à cristaux liquides selon l'une des revendications précédentes **caractérisé en ce que** la mésophase P est de préférence nématique et les domaines sont des domaines coniques focaux, en particulier avec deux défauts lignes notamment l'un elliptique et l'autre hyperbolique, de préférence les domaines coniques focaux forment un réseau linéaire parallèle à une direction b.

13. Système optique à cristaux liquides (2000, 3000, 4000) selon l'une des revendications précédentes **caractérisé en ce que** le premier dispositif et le deuxième dispositif sont disjoints ou liés par une couche de liaison transparente notamment une colle optique ou une couche thermoplastique notamment d'intercalaire de feuilletage ou en ce qu' un support commun transparent, de préférence verre en plastique, est porteur sur une première face principale de la deuxième électrode et de l'autre côté sur une deuxième face principale opposée, de la troisième électrode.

14. Vitrage feuilleté (3000, 4000) comprenant le système optique selon l'une des revendications précédentes et :

- une première feuille additionnelle de verre (8), transparente
- un intercalaire de feuilletage thermoplastique notamment EVA ou PVB
- une deuxième feuille additionnelle de verre (8') ou de plastique transparente les faces principales internes dites F2 et F3 des première et deuxième feuilles additionnelles étant en regard, le système optique selon l'une des revendications précédentes étant de préférence entre les faces F2 et F3 et de préférence dans l'intercalaire de feuilletage.

15. Vitrage de véhicule ou de bâtiment (2000, 3000, 4000) porteur du système optique selon l'une des revendications précédentes.

**Patentansprüche**

1. Optisches Flüssigkristallsystem (1000, 1000', 1001, 1002, 1003, 1000a), umfassend:

- eine elektrisch steuerbare variable Diffusionsvorrichtung (10), die als erste Vorrichtung bezeichnet wird und einen Stapel von Schichten umfasst, wie folgt:

- eine erste transparente Elektrode (2'a) mit einer Hauptseite, die als erste Anschlussfläche SA1 bezeichnet wird, und einer gegenüberliegenden Fläche, die als Außenfläche SB bezeichnet wird
- eine zweite transparente Elektrode (2a) mit einer Hauptseite, die als zweite Anschlussfläche SA2 bezeichnet wird, und einer gegenüberliegenden Außenfläche SB2, mit einem ersten elektrischen Feld E1 zwischen der ersten und der zweiten Elektrode
- eine erste elektroaktive dielektrische Schicht (3a) mit einer Hauptseite, die als Fläche FA1 bezeichnet wird, auf der Seite der ersten Anschlussfläche SA1, und einer Hauptseite, die als Fläche FA2 bezeichnet wird, aus einem ersten Material, umfassend:

- erste Flüssigkristalle,
- Polymere, die ein Polymernetzwerk bilden, wobei die ersten Flüssigkristalle durch das Polymernetzwerk stabilisiert werden,
wobei das erste Material ab einer Temperatur, die mit T1 bezeichnet wird, eine so genannte Mesophase P darstellt, in der das erste Material einen Satz von Domänen umfasst, die zweidimensionale topologische Defekte umfassen,
wobei das optische System derart beschaffen ist, dass das erste Material mindestens einen ersten dichroitischen Farbstoff umfasst und die erste elektroaktive Schicht (3a) eine optische Reaktion aufweist, die vom Polarisationszustand eines auf die erste Vorrichtung auftreffenden Lichts abhängig ist,
und dass das optische System gegenüber von der ersten Vorrichtung eine elektrisch schaltbare Vorrichtung mit variabler Polarisation umfasst, die als zweite Vorrichtung (100, 100', 100a, 101, 102) bezeichnet wird, wobei die zweite Vorrichtung umfasst:

- dritte und vierte transparente Elektroden (2,2') mit einem zweiten elektrischen Feld E2 zwischen der dritten und der vierten Elektrode
- eine zweite elektroaktive Schicht (3) aus einem zweiten Material mit einer Hauptseite FA3 auf der Seite der dritten Elektrode (2) und einer gegenüberliegenden Hauptseite FA4, umfassend:
- zweite Flüssigkristalle, die nematisch sind
- zweite dichroitische Farbstoffe,

und dass sich die dritte Elektrode (2, 21) zwischen der zweiten elektroaktiven Schicht (3) und der ersten Vorrichtung (10) erstreckt.

2. Optisches Flüssigkristallsystem (1000, 1000', 1001, 1002, 1003, 1000a) nach dem vorhergehenden Anspruch, **dadurch gekennzeichnet, dass** die zweite Vorrichtung nicht über statische Polarisationsfolien verfügt.

3. Optisches Flüssigkristallsystem (1000, 1000', 1001, 1002, 1003, 1000a) nach einem der vorhergehenden Ansprüche, **dadurch gekennzeichnet, dass** das erste elektrische Feld E1 ein Wechselspannungsfeld ist und das zweite elektrische Feld E2 ein Wechselspannungsfeld ist, und vorzugsweise die erste und die zweite Elektrode (4'a, 4a) in getrennten Ebenen liegen, und die ersten Flüssigkristalle eine positive dielektrische Anisotropie aufweisen.

4. Optisches Flüssigkristallsystem (1000, 1000', 1001, 1002, 1003, 1000a) nach einem der vorhergehenden Ansprüche, **dadurch gekennzeichnet, dass** die zweite Vorrichtung (100) einen ersten und einen zweiten Funktionszustand darstellt und:

- die zweite Vorrichtung im ersten Funktionszustand in der Lage ist, aus einem unpolarisierten einfallenden Licht auf der der ersten Vorrichtung (10) gegenüberliegenden Seite in der Lage ist, ein Ausgangslicht auf der Seite der ersten Vorrichtung mit einer ersten Komponente des elektrischen Felds P1 entlang einer ersten Achse und einer zweiten Komponente des elektrischen Felds P2 entlang einer zweiten Achse senkrecht zur ersten Achse abzugeben, wobei ein erstes Polarisationsverhältnis definiert ist durch:

[Math 5]

$$rp1 = \frac{T1}{T1+T2}$$

wobei rp1 mindestens 70 % oder sogar mindestens 90 % beträgt, T1 die Gesamttransmission bei einer Wellenlänge zwischen 380 und 800 nm entlang der ersten Achse ist und T2 die Gesamttransmission bei der Wellenlänge zwischen 380 und 800 nm entlang der zweiten Achse bei einer ersten Spannung U2a zwischen der dritten und der vierten Elektrode ist, die vorzugsweise Null beträgt
- und im zweiten Zustand:

entweder i) die zweite Vorrichtung in der Lage ist, aus unpolarisiertem einfallendem Licht auf der der ersten Vorrichtung gegenüberliegenden Seite, Ausgangslicht auf der Seite der ersten Vorrichtung mit einem zweiten Polarisationsverhältnis abzugeben, das definiert ist durch:

[Math 6]

$$rp2 = \frac{T\prime2}{T\prime1 + T\prime2}$$

wobei rp2 mindestens 30 %, sogar mindestens 50 % beträgt
T'1 die Gesamttransmission bei einer Wellenlänge zwischen 380 und 800 nm entlang der ersten Achse ist und T'2 die Gesamttransmission bei der Wellenlänge zwischen 380 und 800 nm entlang der zweiten Achse bei einer zweiten Spannung U2b zwischen der dritten und der vierten Elektrode ist, gegebenenfalls Null, wobei U2b sich von U2a unterscheidet
oder j) die zweite Vorrichtung in der Lage ist, aus unpolarisiertem einfallendem Licht auf der der ersten Vorrichtung gegenüberliegenden Seite, auf der Seite der ersten Vorrichtung unpolarisiertes Ausgangslicht bereitzustellen,
wobei einer des ersten und des zweiten Zustands ein ausgeschalteter Zustand ist, der andere des ersten und des zweiten Zustands ein eingeschalteter Zustand ist.

5. Optisches Flüssigkristallsystem (1000, 1000', 1001, 1002, 1003) nach einem der vorhergehenden Ansprüche, **dadurch gekennzeichnet, dass** die dritte und die vierte Elektrode koplanar sind und abwechselnd erste und zweite elektrisch leitfähige Streifen (21, 22) mit unterschiedlichen Potenzialen bilden, wobei der erste und der zweite elektrisch leitfähige Streifen in eine Richtung r0 verlängert ist, und die zweite Vorrichtung mit vorzugsweise zweiten nematischen verdrillten Flüssigkristallen im ausgeschalteten Zustand der zweiten Vorrichtung Folgendes umfasst:

- eine unidirektionale planare Verankerungsschicht entlang einer Richtung r1 (4') in Kontakt mit der Seite FA3 der zweiten elektroaktiven Schicht (3) und auf der dritten und der vierten Elektrode
- und eine weitere unidirektionale planare Verankerungsschicht entlang einer Richtung r2 (4), die sich vorzugsweise von r1 unterscheidet, in Kontakt mit der Seite FA4 der zweiten elektroaktiven Schicht (3).

6. Flüssigkristallsystem (1000, 1000', 1001, 1002, 1003) nach Anspruch 5, **dadurch gekennzeichnet, dass** r1 mit r2 einen Winkel von 90°±15° und besser von 90°±5° bildet:

- r0 mit r1 einen Winkel von höchstens 15° und sogar höchstens 5° bildet und die zweiten Flüssigkristalle eine positive dielektrische Anisotropie aufweisen
- oder r0 mit r1 einen Winkel von 90°±15° und besser von 90°±5° bildet und die zweiten Flüssigkristalle eine negative dielektrische Anisotropie aufweisen.

7. Optisches Flüssigkristallsystem (1000, 1000', 1001, 1002) nach einem der vorhergehenden Ansprüche, **dadurch gekennzeichnet, dass** die zweite Vorrichtung (100, 100', 101, 102) in einem ersten Funktionszustand, bei dem es sich um den ausgeschalteten Zustand handelt, in der Lage ist, polarisiertes Licht mit einer Polarisation P1 abzugeben, und in einem zweiten Funktionszustand, bei dem es sich um den eingeschalteten Zustand handelt, in der Lage ist, polarisiertes Licht mit einer zweiten Polarisation P2 abzugeben, wobei insbesondere P1 senkrecht zu r1 und P2 parallel zu r1 steht.

8. Optisches Flüssigkristallsystem nach einem der Ansprüche 1 bis 7, **dadurch gekennzeichnet, dass** die zweite Vorrichtung in einem ersten Funktionszustand, der der ausgeschalteter Zustand ist, in der Lage ist, Licht mit einer Polarisation P1, insbesondere senkrecht zu r1, abzugeben, die erste Vorrichtung eine gerichtete Verankerungsschicht (2a) in einer ersten Richtung b auf der Seite FA1 oder vorzugsweise auf der Seite FA2 umfasst, wobei die zweite Vorrichtung so angeordnet ist, dass P1 mit b einen Winkel von 0°±20° oder sogar 0°±5° bildet.

9. Optisches Flüssigkristallsystem nach einem der Ansprüche 1 bis 7, **dadurch gekennzeichnet, dass** die zweite Vorrichtung in einem ersten Funktionszustand, der der ausgeschalteter Zustand ist, in der Lage ist, polarisiertes Licht mit einer Polarisation P1, insbesondere senkrecht zu r1, abzugeben, die erste Vorrichtung eine gerichtete Verankerungsschicht (2a) entsprechend einer ersten Richtung b auf der Seite FA1 oder vorzugsweise auf der Seite FA2 umfasst, wobei die zweite Vorrichtung (100) so angeordnet ist, dass P1 mit b einen Winkel von 90°±20° oder sogar 90°±5° bildet.

10. Optisches Flüssigkristallsystem nach einem der Ansprüche 1 bis 4, **dadurch gekennzeichnet, dass** die zweite elektroaktive Schicht zwischen der dritten und der vierten Elektrode liegt und dass die zweite Vorrichtung umfasst:

    - eine unidirektionale planare Verankerungsschicht entlang einer Richtung r1 auf der Hauptseite FA3 der zweiten elektroaktiven Schicht und auf der dritten Elektrode
    - und eine weitere unidirektionale planare Verankerungsschicht auf der Hauptseite FA4 der zweiten elektroaktiven Schicht und auf der vierten Elektrode, dadurch, dass:

        - r1 mit r2 einen Winkel von höchstens 15° und sogar höchstens 5° bildet, die zweiten Flüssigkristalle eine negative dielektrische Anisotropie aufweisen, die Orientierung der zweiten Flüssigkristalle in der Dicke der zweiten elektroaktiven Schicht im ausgeschalteten Zustand der zweiten Vorrichtung überwiegend homöotrop ist
        - oder r1 mit r2 einen Winkel von höchstens 15° und sogar höchstens 5° bildet, die zweiten Flüssigkristalle eine positive dielektrische Anisotropie aufweisen,
        - oder r1 mit r2 einen Winkel von 90°±15° und besser von 90°±5° bildet, die zweiten Flüssigkristalle eine positive dielektrische Anisotropie aufweisen.

11. Optisches Flüssigkristallsystem (1000, 1000', 1001, 1002) nach einem der vorhergehenden Ansprüche, **dadurch gekennzeichnet, dass** die zweite Vorrichtung in einem ersten Funktionszustand, der vorzugsweise der ausgeschaltete Zustand ist, in der Lage ist, Licht mit einer Polarisation P1, insbesondere senkrecht zu r1, abzugeben

    - im ersten Funktionszustand die Unschärfe am Ausgang der ersten Vorrichtung um mindestens 10 % größer ist als die Unschärfe, die bei unpolarisiertem einfallendem Licht am Eingang der ersten Vorrichtung erreicht wird
    - und vorzugsweise in einem zweiten Funktionszustand, der vorzugsweise der eingeschaltete Zustand der zweiten Vorrichtung ist, die Unschärfe am Ausgang des ersten Vorrichtung um mindestens 10 % geringer ist als die Unschärfe, die bei unpolarisiertem einfallendem Licht am Eingang der ersten Vorrichtung erreicht wird.

12. Optisches Flüssigkristallsystem nach einem der vorhergehenden nematisch ist und die Domänen fokale konische Domänen sind, insbesondere mit zwei Liniendefekten, insbesondere einem elliptischen und einem hyperbolischen Defekt, wobei die fokalen konischen Domänen vorzugsweise ein lineares Netzwerk parallel zu einer Richtung b bilden.

13. Optisches Flüssigkristallsystem (2000, 3000, 4000) nach einem der vorhergehenden Ansprüche, **dadurch gekennzeichnet, dass** die erste Vorrichtung und die zweite Vorrichtung getrennt sind oder durch eine transparente Verbindungsschicht, insbesondere einen optischen Kleber oder eine thermoplastische Schicht, insbesondere eine Laminierungszwischenschicht, verbunden sind, oder dadurch, dass ein transparenter gemeinsamer Träger, vorzugsweise Kunststoffglas, die zweite Elektrode auf einer ersten Hauptseite und die dritte Elektrode auf der anderen Seite auf einer gegenüberliegenden zweiten Hauptseite trägt.

14. Verbundglasscheibe (3000, 4000), umfassend das optische System nach einem der vorhergehenden Ansprüche und:

    - eine erste zusätzliche Folie aus transparentem Glas (8);
    - eine thermoplastische Verbundzwischenschicht, insbesondere EVA oder PVB
    - eine erste zusätzliche Folie aus transparentem Glas (8') oder transparentem Kunststoff;

wobei die inneren Hauptseiten mit der Bezeichnung F2 und F3 der ersten und der zweiten zusätzlichen Folie einander zugewandt sind, wobei sich das optische System nach einem der vorhergehenden Ansprüche vorzugsweise zwischen den Seiten F2 und F3 und vorzugsweise in der Laminierzwischenschicht befindet.

15. Fahrzeug- oder Gebäudeverglasung (2000, 3000, 4000), die das optische System nach einem der vorhergehenden Ansprüche trägt.

**Claims**

1. A liquid crystal optical system (1000, 1000', 1001, 1002, 1003, 1000a) including:

   - a variable-scattering electrically controllable device (10), referred to as a first device, including a following stack of layers:

      - a transparent first electrode (2'a) with a main surface referred to as a first connecting surface SA1 and an opposite surface called an opposite external surface SB
      - a transparent second electrode (2a) with a main surface referred to as a second connecting surface SA2 and with an opposite external surface SB2, with a first electric field E1 between the first and second electrodes
      - a first dielectric electroactive layer (3a) with a main face referred to as face FA1 on the side of the connecting surface SA1 and a main face referred to as face FA2, made of a first material including:

         - first liquid crystals,
         - polymers forming a polymeric network, the first liquid crystals being stabilized by the polymeric network,

         the first material exhibits, from a temperature referred to as T1, a mesophase referred to as P, wherein the first material includes a set of domains, which include two-dimensional topological defects,
         that the optical system is such that the first material includes at least a first dichroic dye,
         and that the first electroactive layer (3a) has an optical response depending on the state of polarization of an incident light on the first device,
         and that the optical system includes, facing the first device, an electroswitchable device with variable polarization, referred to as a second device (100, 100', 100a, 101, 102), the second device including:

            - third and fourth transparent electrodes (2, 2') with a second electric field E2 between the third and fourth electrodes
            - a second electroactive layer (3) made of a second material with a main face FA3 on the side of the third electrode (2) and an opposite main face FA4 including:
            - second liquid crystals which are nematic
            - second dichroic dyes,

         and that the third electrode (2, 21) extends between the second electroactive layer (3) and the first device (10).

2. The liquid crystal optical system (1000, 1000', 1001, 1002, 1003, 1000a) according to the preceding claim, **characterized in that** the second device is devoid of static polarizing films.

3. The liquid crystal optical system (1000, 1000', 1001, 1002, 1003, 1000a) according to one of the preceding claims, **characterized in that** the first electric field E1 is alternating and the second electric field E2 is alternating, and preferably the first and second electrodes (4'a, 4a) are in distinct planes, and the first liquid crystals have positive dielectric anisotropy.

4. The liquid crystal optical system (1000, 1000', 1001, 1002, 1003, 1000a) according to one of the preceding claims, **characterized in that** the second device (100) has first and second functional states and:

   - in the first functional state, from an unpolarized incident light on the side opposite to the first device (10), the second device is able to deliver an output light on the side of the first device with a first component of the electric field P1 along a first axis and a second component of the electric field P2 along a second axis normal to the first axis, with a first polarization ratio defined by:

[Math 5]

$$rp1 = \frac{T1}{T1 + T2}$$

rp1 being at least 70%, and even at least 90%, T1 being the total transmission at a wavelength between 380 and 800 nm along the first axis and T2 being the total transmission along the second axis at the wavelength between 380 and 800 nm for a first voltage U2a between the third and fourth electrodes a value that is preferably zero
- and in the second state:

either i) from an unpolarized incident light on the side opposite to the first device, the second device being able to deliver an output light on the side of the first device with a second polarization ratio defined by:

[Math 6]

$$rp2 = \frac{T'2}{T'1 + T'2}$$

rp2 being at least 30%, and even at least 50%
T'1 being the total transmission at a wavelength between 380 and 800 nm along the first axis and T'2 being the total transmission along the second axis at the wavelength between 380 and 800 nm for a second given voltage U2b between the third and fourth electrodes, a value potentially zero, U2b being distinct from U2a
or j) from an unpolarized incident light on the side opposite to the first device, the second device being able to provide an unpolarized output light on the side of the first device,
one of the first and second states being in the off state, the other of the first and second states being in an on state.

5. The liquid crystal optical system (1000, 1000', 1001, 1002, 1003) according to one of the preceding claims, **characterized in that** the third and fourth electrodes are coplanar, forming an alternation of first and second electrically conductive strips (21, 22) at distinct potentials, first and second electrically conductive strips elongated in a direction r0, and **in that** the second device preferably with second twisted nematic liquid crystals in the off state of the second device, includes:

   - a unidirectional planar anchoring layer in a direction r1 (4') in contact with face FA3 of the second electroactive layer (3) and on the third and fourth electrodes
   - and another unidirectional planar anchoring layer in a direction r2 (4) preferably distinct from r1 in contact with face FA4 of the second electroactive layer (3).

6. The liquid crystal system (1000, 1000', 1001, 1002, 1003) according to claim 5, **characterized in that** r1 forms an angle of 90°±15° and better still of 90°±5° with r2:

   - r0 forms an angle of at most 15° and even at most 5° with r1 and the second liquid crystals have positive dielectric anisotropy
   - or r0 forms an angle of 90°±15° and better still of 90°±5° with r1 and the second liquid crystals have negative dielectric anisotropy.

7. The liquid crystal optical system (1000, 1000', 1001, 1002) according to one of the preceding claims, **characterized in that** the second device (100, 100', 101, 102) in a first functional state which is the off state is able to deliver a polarized light with a polarization P1 and in a second functional state which is the on state is able to deliver a polarized light with a second polarization P2, in particular P1 is normal to r1 and P2 parallel to r1.

8. The liquid crystal optical system according to one of claims 1 to 7, **characterized in that** the second device, in a first functional state which is the off state, is able to deliver a light with a polarization P1 in particular normal to r1, the first device includes a directional anchoring layer (2a) along a first direction b on face FA1 or preferably on face FA2, the second device is arranged such that P1 forms an angle with b of 0°±20° or even 0±5°.

9. The liquid crystal optical system according to one of claims 1 to 7, **characterized in that** the second device, in a first functional state which is the off state, is able to deliver a polarized light with a polarization P1 in particular normal to r1, the first device includes a directional anchoring layer (2a) along a first direction b on face FA1 or preferably on face FA2, the second device (100) is arranged such that P1 forms an angle with b of 90°±20° or even 90±5°.

10. The liquid crystal optical system according to one of claims 1 to 4, **characterized in that** the second electroactive layer is between the third and fourth electrodes and **in that** the second device includes:

- a unidirectional planar anchoring layer in a direction r1 on the main face FA3 of the second electroactive layer and on the third electrode
- and another unidirectional planar anchoring layer, on the main face FA4 of the second electroactive layer and on the fourth electrode in that:

- r1 forms an angle of at most 15° and even of at most 5° with r2, the second liquid crystals have negative dielectric anisotropy, the orientation of the second liquid crystals in the thickness of the second electroactive layer in the off state of the second device is predominantly homeotropic
- or r1 forms an angle of at most 15° and even at most 5° with r2, the second liquid crystals have positive dielectric anisotropy
- or r1 forms an angle of 90°±15° and better still of 90°±5° with r2, the second liquid crystals have positive dielectric anisotropy.

11. The liquid crystal optical system (1000, 1000', 1001, 1002) according to one of the preceding claims, **characterized in that** the second device, in a first functional state which is preferably the off state, is capable of delivering a light with a polarization P1 in particular normal to r1

- in the first functional state, the haze at the output of the first device is at least 10% greater than the haze obtained with an unpolarized incident light at the input of the first device
- and preferably in a second functional state, which is preferably the on state of the second device, the haze at the output of the first device is at least 10% less than the haze obtained with an unpolarized incident light at the input of the first device.

12. The liquid crystal optical system according to one of the preceding claims, **characterized in that** the mesophase P is preferably nematic and the domains are focal conic domains, in particular with two defect lines, especially one elliptical and the other hyperbolic, preferably the focal conic domains form a linear network parallel to a direction b.

13. The optical liquid crystal system (2000, 3000, 4000) according to one of the preceding claims, **characterized in that** the first device and the second device are disjoined or linked by a transparent bonding layer, especially an optical glue or a thermoplastic layer, especially a lamination interlayer or **in that** a transparent common support, preferably plastic glass, bears on a first main face the second electrode and on the other side, on an opposite second main face, the third electrode.

14. A laminated glazed unit (3000, 4000) including the optical system according to one of the preceding claims and:

- a first additional glass sheet (8) that is transparent
- a thermoplastic, especially EVA or PVB, lamination interlayer
- a second transparent additional glass (8') or plastic sheet

the main internal faces, referred to as F2 and F3, of the first and second additional sheets facing one another, the optical system according to one of the preceding claims preferably being faces F2 and F3 and preferably in the lamination interlayer.

15. A vehicle or building glazed unit (2000, 3000, 4000) bearing the optical system according to one of the preceding claims.

# Fig.1

# Fig.2

# Fig.3

**Fig.4**

**Fig.5**

# Fig.6

# Fig.7

# Fig.8

# Fig.9

## Fig.10

## Fig.11

# Fig.12

50,0 µm

# Fig.13

## Fig.14

## Fig.15

# Fig.16

# Fig.17

# Fig.18

# Fig.19

Fig.20

# Fig.21

## Fig.22

## Fig.23

## Fig.24

## Fig.25

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2020065038 A
- WO 2021115246 A1
- WO 2015177356 A1
- US 2012140133 A1
- WO 04025334 A
- WO 2010136702 A

**Littérature non-brevet citée dans la description**

- **LI**. Dye-doped dual-frequency nematic cells as fast-switching polarization-independent shutters. *OPTICS EXPRESS*, February 2019, vol. 27 (4), 3861
- **LING LING MA**. Smectic Layer Origami Preprogrammed Photoalignement. *Advances Materials*, 2017, vol. 1606671, 1-7
- **MARK T SIMS**. dyes as guests in ordered systems : current understanding and future directions. *Liquid Crystals*, 2016, vol. 43 (13-15), 2363-2374
- Electroopic effetc in Liquid Crystal Materials. **L.M BLINOV**. Optical Anisotropiy and Dichroïsm. Springer, 1994, 66-68